(19) Europäisches Patentamt
European Patent Office
Office européen des brevets

(11) EP 2 068 141 B1

(12) **EUROPÄISCHE PATENTSCHRIFT**

(45) Veröffentlichungstag und Bekanntmachung des Hinweises auf die Patenterteilung:
**24.06.2020 Patentblatt 2020/26**

(51) Int Cl.:
***G01N 21/64*** (2006.01) ***G01N 21/27*** (2006.01)

(21) Anmeldenummer: **09153880.1**

(22) Anmeldetag: **07.09.2005**

(54) **Kit, dessen Verwendung und Verfahren zur Kalibrierung eines Photolumineszenzmesssystems**

Kit, its use and method for calibration of a photoluminescence measuring system

Kit, son utilisation pour et procédé d'étalonnage d'une système de mesure de photoluminescence

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.09.2004 DE 102004044717**

(43) Veröffentlichungstag der Anmeldung:
**10.06.2009 Patentblatt 2009/24**

(62) Dokumentnummer(n) der früheren Anmeldung(en) nach Art. 76 EPÜ:
**05090255.0 / 1 635 164**

(73) Patentinhaber:
- **BAM Bundesanstalt für Materialforschung und -prüfung**
  **12205 Berlin (DE)**
- **Sigma-Aldrich GmbH**
  **9470 Buchs (CH)**

(72) Erfinder:
- **Resch-Genger, Ute**
  **12203 Berlin (DE)**
- **Schönenberger, Bernhard**
  **9478 Buchs, Azmoos (CH)**
- **Pfeifer, Dietmar**
  **12459 Berlin (DE)**
- **Monte, Christian**
  **13591 Berlin (DE)**
- **Hoffmann, Angelika**
  **12623 Berlin (DE)**
- **Nording, Pierre**
  **9473 Gams SG (DE)**
- **Hoffmann, Katrin**
  **12524 Berlin (DE)**
- **Spieles, Monika**
  **12587 Berlin (DE)**
- **Rurack, Knut**
  **12247 Berlin (DE)**

(74) Vertreter: **Zimmermann & Partner Patentanwälte mbB**
**Postfach 330 920**
**80069 München (DE)**

(56) Entgegenhaltungen:
**WO-A1-97/19188** **WO-A2-02/104072**
**US-A1- 2003 096 419**

- **EATON D F: "Reference materials for fluorescence measurement", PURE & APPLIED CHEMISTRY, PERGAMON PRESS, OXFORD, GB, Bd. 60, Nr. 7, 1. Januar 1988 (1988-01-01) , Seiten 1107-1114, XP002721157, ISSN: 0033-4545, DOI: 10.1351/PAC198860071107**
- **RANCE A VELAPOLDI ET AL: "Corrected Emission Spectra and Quantum Yields for a Series of Fluorescent Compounds in the Visible Spectral Region", JOURNAL OF FLUORESCENCE, PLENUM PUBLISHING, NEW YORK, US, Bd. 14, Nr. 4, 1. Juli 2004 (2004-07-01), Seiten 465-472, XP002620230, ISSN: 1053-0509, DOI: 10.1023/B:JOFL.0000031828.96368.C1**
- **GARDECKI J A ET AL: "SET OF SECONDARY EMISSION STANDARDS FOR CALIBRATION OF THE SPECTRAL RESPONSIVITY IN EMISSION SPECTROSCOPY", APPLIED SPECTROSCOPY, THE SOCIETY FOR APPLIED SPECTROSCOPY. BALTIMORE, US, Bd. 52, Nr. 9, 1. Januar 1998 (1998-01-01) , Seiten 1179-1189, XP008064438, ISSN: 0003-7028**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 068 141 B1

## Beschreibung

Die Erfindung betrifft einen Kit zur Kalibrierung eines Photolumineszenzmesssystems, insbesondere eines Fluoreszenzmesssystems, sowie die Verwendung dieses Kits zur Kalibrierung von Photolumineszenzmesssystemen. D.F. Eaton (1988) beschreibt in PURE & APPL CHEM, Bd. 60, Nr.7, Seiten 1107-1114 Referenzmaterialien für Fluoreszenzmessungen. WO 97119188 A1 beschreibt die Bestimmung biologischer Moleküle mittels chemischer Verstärkung und optischer Sensoren. WO 02/104072 A2 beschreibt emissive Multichromophor-Systeme. US 2003/096419 A1 beschreibt ein Verfahren um zu bestimmen, ob eine Flüssigkeit in einer Klimaanlage oder einem Kühlsystem verändert wurde, wobei zur Markierung von Kühl- und Schmiermitteln Fluoreszenzfarbstoffe verwendet werden. Rance A. Velapoldi et al. (2004) beschreiben in Journal of Fluorescence, Band 14(4), Seiten 465-472 korrigierte Emissionsspektren und Quantenausbeuten einer Serie von im sichtbaren Spektralbereich fluoreszierenden Verbindungen.

Jede Lumineszenzmesstechnik liefert Messdaten, die sich aus analyt- und gerätespezifischen Beiträgen zusammensetzen.

Die nicht erwünschten gerätespezifischen Beiträge spiegeln die Wellenlängen- und Polarisationsabhängigkeit von Gerätekomponenten des verwendeten Messgerätes wieder. Verantwortlich für diese Abhängigkeiten sind insbesondere die im Anregungs- und Emissionskanal des Gerätes enthaltenen optischen Bauelemente, die Anregungslichtquelle und die eingesetzten Detektionssysteme. Die Vergleichbarkeit von Lumineszenzdaten über Geräte- und Laborgrenzen hinaus, die Erfassung der Gerätealterung, der Anspruch auf Rückführbarkeit von Lumineszenzdaten auf radiometrische Primärnormale (entsprechend der allgemeinen Forderung in EN ISO/IEC 17025) sowie viele quantitative Fluoreszenzaussagen, die Bestimmung von relativen Fluoreszenzquantenausbeuten und die Optimierung von Lumineszenzmethoden erfordern die Ermittlung dieser gerätespezifischen Beiträge. Dies gilt insbesondere für vergleichende Bewertungen von spektral gegen einander verschobenen Lumineszenzprofilen oder für Emissionsmessungen bei verschiedenen Anregungswellenlängen.

Photolumineszenzmessgeräte bestehen aus einem Anregungskanal, der u.a. eine Anregungslichtquelle und ein wellenlängenselektierendes optisches Bauelement enthält und einem meist rechtwinklig zum Strahlengang des Anregungslichtes angeordneten Emissionskanal, mit dem das von dem im Probenraum befindlichen Chromophor nach Lichtabsorption emittierte Licht (Photolumineszenz) aufgezeichnet wird. Oftmals wird über einen Strahlteiler ein definierter Teil des Anregungslichtes in einen Referenzkanal eingekoppelt, der ein optisches Bauelement wie einen Spiegel oder einen Streuer und einen (Referenz-) Detektor enthält. Mit dem Referenzkanal wird die aktuelle Anregungslichtintensität bei der Anregungswellenlänge aufgezeichnet, um so kurzzeitige Schwankungen der Anregungslichtintensität zu erfassen. Die Erfassung der oben genannten gerätespezifischen Beiträge zum Fluoreszenzsignal kann durch die Ermittlung so genannter Korrekturfunktionen erfolgen, die die Wellenlängen- und Polarisationsabhängigkeiten dieser Effekte für den Emissions- und den Anregungskanal des jeweiligen Gerätes beschreiben. Diese Korrekturfunktionen werden dabei separat ermittelt. Die Emissionskorrekturfunktion enthält dabei die wellenlängen- und polarisationsabhängige Transmissionseffizienz der optischen Bauteile im Emissionskanal und die wellenlängen- und polarisationsabhängige spektrale Empfindlichkeit des eingesetzten Detektionssystems. Die Anregungskorrekturfunktion beschreibt die wellenlängenabhängige spektrale Strahldichte der Anregungslichtquelle und die wellenlängen- und polarisationsabhängige Transmissionseffizienz der optischen Bauteile im Anregungskanal.

Bekannt ist der Einsatz zertifizierter physikalischer Transferstandards zur Erfassung der gerätespezifischen Effekte. Zur Kalibrierung des Anregungskanals kommen dabei typischerweise zertifizierte Empfängernormale zum Einsatz und für die Kalibrierung des Emissionskanals zertifizierte Standardlampen. Für den Einsatz physikalischer Transfernormale nachteilig sind die für die Anwendung notwendigen guten Optikkenntnisse des Anwenders, kostenintensive Rekalibrierungen, brenndauerabhängige Änderungen der spektralen Strahldichte von Standardlampen, und im Falle der Emissionskorrektur mit Standardlampen die unterschiedlichen Emissionscharakteristika von Lampe und Probe und die um mindestens mehr als drei Größenordnungen unterschiedlichen spektralen Strahldichten von Transfernormal und einer typischen lumineszierenden Probe. Dies alles kann zu fehlerbehafteten und unbefriedigenden Korrekturfunktionen führen und ist zudem aufwändig und kostenintensiv. Physikalische Transferstandards sind außerdem zumeist nicht für die Kalibrierung von einfachen kompakten Photolumineszenzmesssystemen geeignet.

Für die Anregungskorrektur werden auch so genannte Quantenzähler eingesetzt. Dies sind hochkonzentrierte Farbstofflösungen, die einfallende Lichtquanten vollständig absorbieren und mit einer wellenlängenunabhängigen Fluoreszenzquantenausbeute emittieren. Quantenzähler liefern sehr konzentrations- und geometrieabhängige Messdaten und sind zudem anfällig für Polarisationseffekte. Standardisierte Kalibrierverfahren mit definierten Konzentrationen in Kombination mit definierten Messgeometrien sind für Quantenzähler nicht verfügbar.

Bekannt sind ebenfalls so genannte Fluoreszenzstandards, die typischerweise auf der Photolumineszenz einer chemischen Verbindung basieren. Spektrale Fluoreszenzstandards oder so genannte Emissions- und Anregungsstandards mit bekannten, (für gerätespezifische Effekte) korrigierten Emissions- bzw. Anregungsspektren können zur Ermittlung der spektralen Charakteristika von Photolumineszenzmesssystemen im Rahmen einer Gerätekalibrierung verwendet werden. Solche Fluoreszenzstandards werden in verschiedenen Formen eingesetzt, insbesondere in Form von

Lösungen oder eingebettet in feste Polymer- oder Glasmatrizes. Vorteil von Fluoreszenzstandards, insbesondere in Form von Lösungen, ist, dass sich diese mit den zu untersuchenden lumineszierenden Proben hinsichtlich ihrer Lumineszenzintensität und Emissionscharakteristika stark ähneln. Fluoreszenzstandards erlauben somit die (spektrale) Kalibrierung unter den bei typischen Probenmessungen angewandten Bedingungen. Fluoreszenzstandards lassen sich in vielen verschiedenen Gerätetypen, Formaten und Messgeometrien vermessen und sind somit auch zur Kalibrierung von Fluoreszenzmesssystemen mit speziellen Probengeometrien oder -formaten geeignet, beispielsweise mit Mikroküvetten, Mikrotiterplatten oder Kryostatsystemen. Allein Fluoreszenzstandards erlauben die Durchführung der Kalibrierung in der selben Küvetten- und Messanordnung wie die eigentliche Probenmessung und liefern auf diese Weise optimale Kalibrierergebnisse. Problematisch bei Fluoreszenzstandards ist die Vielzahl der zu definierenden Stoff- und Lumineszenzeigenschaften. Voraussetzung für die Eignung eines Transferstandards ist die vollständige Charakterisierung aller applikationsrelevanten Eigenschaften inklusive der verwendeten Methode und der Angabe der Messunsicherheit und eine hinreichenden Langzeitstabilität im festen reinen Zustand und in Lösung bzw. eingebettet in einer Matrix.

In der Fachliteratur sind zahlreiche Empfehlungen zu Fluoreszenzstandards umfassend diskutiert, auch zu Emissions- und Anregungsstandards sowie zu Fluoreszenzquantenausbeutestandards. Chininsulfatdihydrat (SRM936) ist bislang der einzige Emissionsstandard, dessen korrigiertes Emissionsspektrum von einem Staatsinstitut, hier vom National Institut for Standards and Technology (NIST, USA), mit einem rückführbar charakterisierten Referenzfluormeter mit bekannter Messunsicherheit zertifiziert wurde (R.A. Velapoldi, K.D. Mielenz, NBS Spec. Publ. 1980, 260-264, PB 80132046, Springfield, VA). Allein zu diesem Standard sind Angaben zur Farbstoffreinheit, zur Kalibrierung des eingesetzten Spektrometers, zu den verwendeten Messparametern und zur Messunsicherheit verfügbar.

Der Spektralbereich, in dem ein Fluoreszenzstandard zur Kalibrierung eingesetzt werden kann, ist durch die Lage und Breite der Fluoreszenzbande limitiert, wobei im Falle von Anregungsstandards möglichst nur die langwelligste Bande eingesetzt werden sollte. Der Emissionsstandard Chininsulfat deckt z. B. nur den Spektralbereich von ca. 400 bis 550 nm ab. Um ein Photolumineszenzmesssystem im gesamten UV/vis/NIR-Spektralbereich zu kalibrieren, ist somit die Kombination mehrerer hinsichtlich ihrer Fluoreszenzspektren aufeinander abgestimmter Chromophore erforderlich. Es gibt aber bislang nur sehr wenige Beispiele für Standardkombinationen. Bekannt ist beispielsweise eine - kommerziell nicht mehr erhältliche - Kombination von Emissionsstandards, die aus fluorophorhaltigen Polymerfolien mit NISTzertifizierten Emissionsspektren bestehen (A. Thommpson, K. L. Eckerle, SPIE 1989, 1054, J.W. Hofstraat & M.J. Latuhihin, Appl. Spectrosc. 1994, 48, 436). Dieses System erfordert eine definierte Messgeometrie, die Verwendung von Polarisatoren und die Durchführung von Lumineszenzmessungen in Front-Face-Geometrie und ist somit für die Kalibrierung einfacher Messsysteme nicht geeignet. Auch weichen die Messbedingungen von typischen Bedingungen für flüssige Proben ab. Eine Kombination der einzelnen Teilkorrekturfunktionen zu einer Gesamtkorrekturfunktion wird nicht beschrieben.

Weiterhin sind fluorophorhaltige Polymethylmethacrylat (PMMA)-Blöcke in Küvettenform als Emissions- und Anregungsstandards bekannt. Die verwendeten Fluorophore weisen i. A. stark strukturierte Emissions- und Anregungsspektren sowie steil ansteigende Flanken auf, wodurch eine nicht mehr vernachlässigbare Abhängigkeit der Fluoreszenzprofile vom Monochromatorbandpass und eine Erhöhung der Kalibrierunsicherheit entsteht. Zudem führen Unsicherheiten in der Wellenrichtigkeit so zu großen Fehlern bei der Fluoreszenzintensität. Die Spektren sind nicht rückführbar, sie sind nicht aufeinander abgestimmt und lassen sich nicht zu einer Gesamtkorrekturfunktion verknüpfen.

Andere bekannte Farbstofflösungen unterschiedlicher Fluorophore sind häufig mit dem Problem schmaler, steil ansteigender Emissionsbanden sowie eines unzureichenden spektralen Abstands von Absorptions- und Emissionsbande behaftet. Dies macht sie als Emissionsstandards ungeeignet. Einige Substanzen weisen zu geringe Photostabilitäten auf und bilden unter typischen Anregungs- und Messbedingungen Photoprodukte mit eigenen spektralen Beiträgen. Viele eingesetzte Substanzen weisen eine zu große Fluoreszenzanisotropie auf, was eine zusätzliche Fehlerquelle bei der Kalibrierung bedeutet und die Verwendung von Polarisatoren erfordert. Im Allgemeinen sind die angegebenen Spektren nicht rückführbar, Angaben zur Messunsicherheit fehlen und nur in Ausnahmefällen (Chininsulfatdihydrat) sind die Spektren von einer autorisierten Stelle zertifiziert. Vielfach ist außerdem die Charakterisierung der anwendungsrelevanten spektroskopischen Eigenschaften unvollständig und Angaben zur Farbstoffreinheit fehlen in den meisten Fällen.

Ein statistischer Ansatz zur Verknüpfung von Teilkorrekturfunktionen unterschiedlicher Farbstoffstandards zu einer Gesamtkorrekturfunktion unter Anwendung einer Zählratenstatistik (Poisson-Statistik) wird von J.A. Gardecki und M. Maroncelli (Appl. Spectrosc. 1998, 52 1179) beschrieben. Die dort verwendeten Fluoreszenzstandards weisen teilweise die oben beschriebenen Unzulänglichkeiten auf, wie z.B. steile und strukturierte Bandenverläufe ($\propto$-NPO), unzureichende Photostabilität in Lösung (Tryptophan, Coumarin 102) oder eine zu hohe Fluoreszenzanisotropie (LDS 751). Gemäß dem verwendeten mathematischen Ansatz einer Zählstatistik ist das Verfahren nur auf Geräte ausgelegt, die im Photo-Counting-Modus und somit mit sehr großen absoluten Zahlenwerten arbeiten. Die Anwendung der Zählstatistik für Geräte im Analogmodus, wo wesentlich kleinere Zahlenwerte für die Intensitäten erhalten werden, führt zu deutlichen Artefakten in den so erhaltenen Korrekturfunktionen. Zudem ist das Verfahren auf die Nutzung durch erfahrene Fluoreszenzspektroskopiker ausgelegt. Problematisch an dem Verfahren ist zudem, dass bei der Verknüpfung der Teilkorrekturkurven der einzelnen Emissionsstandards miteinander für die an vielen Fluorometern ausgegebenen, Referenzlicht-bezogenen Emissionsspektren (Quotientenbildung aus Emission und Referenz) mitunter Artefakte auf der Gesamtkorrekturfunktion erzeugt werden. Diese resultieren dann, wenn nach der Blindwertkorrektur sehr kleine oder gar - wie im Bereich der Ausläufer von Fluoreszenzbanden - geringfügig negative Werte in die Rechnung eingehen.

Insgesamt lässt sich somit feststellen, dass derzeit kein Kalibriersystem existiert, das eine zuverlässige, rückführbare und leicht handhabbare Kalibrierung des gesamten Spektralbereichs eines Photolumineszenzmesssystems erlaubt und auf Farbstoffstandards mit bekannter Unsicherheit der anwendungsrelevanten Fluoreszenzeigenschaften zurückgreift, die sämtlichen Anforderungen an eine reproduzierbare und rückführbare Kalibrierung erfüllen. Somit besteht die Aufgabe der vorliegenden Erfindung darin, ein umfassendes Kalibriersystem unter Verwendung von Fluoreszenzstandards sowie ein Verfahren zur Kalibrierung zur Verfügung zu stellen, die die einfach und reproduzierbar handhabbare, auf radiometrische Primärnormale (Schwarzer Strahler; Kryoradiometer) zurückführbare und zuverlässige Kalibrierung des eines sehr großen Spektralbereichs eines Photolumineszenzmesssystems erlauben.

Diese Aufgabe wird gelöst durch ein Kit von Fluoreszenzstandards (Emissionsstandards und/ oder Anregungsstandards) sowie ein Verfahren mit den Merkmalen der unabhängigen Ansprüche.

Es ist vorgesehen, dass die einzuhaltende relative Mindestintensität an den einzelnen Überschneidungswellenlängen jeweils mindestens 20 % der maximalen Intensität der Fluoreszenzbanden beträgt. Noch weniger fehlerbehaftete Ergebnisse werden bei einer Intensität von mindestens 25 %, vorzugsweise mit mindestens 30 % der maximalen Bandenintensität erhalten. In konkreten Anwendungen liegen diese Intensitäten bei etwa 40 % der maximalen Bandenintensität. Die vorgenannten Werte beziehen sich auf den UV/vis-Spektralbereich mit $\lambda \leq 700$ nm. Da im NIR-Bereich mit $\lambda > 700$ nm grundsätzlich geringere Quantenausbeuten und damit absolute Intensitäten vorliegen, können in diesem Bereich geringere Mindestintensitäten an den Überschneidungspunkten von mindestens 10 %, insbesondere bei etwa 12 %, vorzugsweise 15 % der Maximalintensität der jeweiligen flankierenden Bande zugelassen werden. In Verbindung mit dem begrenzten Überlappungsbereich, für den die statistische Ermittlung der Verknüpfungsfaktoren $\propto_i$ erfolgt, wird somit sichergestellt, dass zumindest im UV/vis-Bereich ausschließlich Intensitäten der korrigierten bzw. der gemessenen (normierten) Spektren von mindestens 10 %, insbesondere von mindestens 15 %, bevorzugt von mindestens 20 % bezogen auf die Maximalintensitäten der entsprechenden Spektren in die Statistik einfließen.

Das erfindungsgemäße Kit, das ggf. jeweils ein Set von Emissions- und Anregungsstandards umfasst, zur rückführbaren Kalibrierung eines Photolumineszenzmesssystems, insbesondere eines Fluoreszenzmesssystems, umfasst folgende Komponenten, deren Formeln nachfolgend noch angeführt sind:

(a) Fluoreszenzstandards i nach den allgemeinen Formeln (1), (2), (5), (7), (8), (9) und (10) und

(b) korrigierte Fluoreszenzspektren $I_i(\lambda)$ der Fluoreszenzstandards i in computerlesbarer Form und/oder eine Angabe einer Internetseite, auf welcher die korrigierten Fluoreszenzspektren $I_i(\lambda)$ abrufbar sind,

wobei die Fluoreszenzstandards i derart gewählt sind, dass ihre spektral korrigierten Fluoreszenzspektren $I_i(\lambda)$ zusammen einen vorgegebenen Spektralbereich abdecken derart, dass im UV/vis-Spektralbereich mit $\lambda \leq 700$ nm Fluoreszenzbanden der korrigierten, jeweils spektral aufeinander folgenden Fluoreszenzspektren $I_i(\lambda)$ an ihren Überschneidungswellenlängen $A_{i/i+1}$ eine vorgegebene Mindestintensität zumindest von 20 % der jeweiligen maximalen Bandenintensität aufweisen, ihre Fluoreszenzbanden jeweils eine Halbwertsbreite (FWHM) zumindest von 1400 $cm^{-1}$ aufweisen sowie einen unstrukturierten, schulterfreien Bandenverlauf mit jeweils nur einem Maximum im relevanten Spektralbereich bei einer spektralen Auflösung von 1 nm.

Die erfindungsgemäße Zusammenstellung des (bzw. der) Kits versetzt einen Benutzer in die Lage, eine Kalibrierung des Messsystems über einen weiten Spektralbereich (310 bis 730 nm, insbesondere von 300 bis 950 nm für die Emissionskorrektur und für die Anregungskorrektur von 280 bis 600 nm, insbesondere von 240 bis 800 nm) zuverlässig, reproduzierbar und preiswert durchzuführen. Insbesondere ermöglicht die erfindungsgemäße Abstimmung der einzelnen Fluoreszenzstandards, d. h. ihrer Halbwertsbreiten sowie die geforderte Mindestintensität an den Überschneidungswellenlängen, die Erzeugung einer Gesamtkorrekturfunktion für das Gerät in bislang nicht verfügbarer Qualität.

Es ist ferner bevorzugt vorgesehen, dass das Kit zu jedem korrigierten Fluoreszenzspektrum einen geräteunabhängigen spektralen Messunsicherheitsverlauf in computerlesbarer Form umfasst. Auch hier ist optional oder zusätzlich möglich, die Angabe einer Internetseite bereitzustellen, auf welcher die Messdaten zusammen mit den spektralen Messunsicherheitsverläufen abrufbar sind. Letztere ermöglichen die Erstellung eines Gesamtmessunsicherheitsverlaufs für die Gesamtkorrekturfunktion, wodurch eine wellenlängenabhängige Messunsicherheitsbilanz für das zu kalibrierende Lumineszenzmesssystem bestimmt werden kann.

Das Kit kann ferner eine Anweisung zum bestimmungsgemäßen Gebrauch der Kitkomponenten und/oder eine Angabe einer Internetseite, auf welcher die Anweisungen abrufbar sind, enthalten. Die Anweisung enthält beispielsweise Angaben zu den Messbedingungen und Geräteeinstellungen und dergleichen.

Die Fluoreszenzstandards des Kits werden als Lösungen vermessen, da auf diese Weise die Kalibrierung weitgehend unter routinetypischen Messbedingungen durchgeführt werden kann. Es ist somit grundsätzlich möglich, dass das Kit die Farbstoffe in Form ihrer Feststoffe oder ihrer fertigen Lösungen enthält. Dabei kann zudem vorgesehen

sein, dass das Kit die zu verwendenden Lösungsmittel umfasst, wobei vorzugsweise für alle Transferstandards das gleiche Lösungsmittel in hoher Reinheit verwendet wird.

Neben der geforderten Mindestintensität der korrigierten Fluoreszenzspektren an ihren jeweiligen Überschneidungswellenlängen im UV/vis-Spektralbereich von mindestens 20 %, insbesondere von mindestens 25 %, vorzugsweise von mindestens 30 % der maximalen Intensität der Lumineszenzbanden (im NIR-Bereich mindestens 10 %, insbesondere mindestens 15 %), sowie der geforderten Mindesthalbwertsbreite, die insbesondere mindestens 1600 $cm^{-1}$, vorzugsweise mindestens 2000 $cm^{-1}$ und im Idealfall sogar mindestens 2400 $cm^{-1}$ beträgt (oberhalb von 700 nm 1200 $cm^{-1}$, insbesondere 1400 $cm^{-1}$) , erfüllen nach weiteren Ausgestaltungen der Erfindung sämtliche Fluoreszenzstandards weitere im Folgenden beschriebene Anforderungen. Nach einer besonders vorteilhaften Ausgestaltung der Erfindung sind alle Farbstoffstandards so gewählt, dass ihre Lumineszenzbanden einen glatten und unstrukturierten Bandenverlauf aufweisen, d. h., bei einer spektralen Auflösung von 1 nm weisen die Banden nur ein Maximum, keine Schultern sowie einen stetigen Bandenverlauf auf. Ebenso wie die geforderte minimale Halbwertsbreite, die mit einer flachen Flankensteilheit der Banden einhergeht, garantiert auch der unstrukturierte und glatte Verlauf der Banden eine bestmögliche Unabhängigkeit der gemessenen Spektren von den Messbedingungen sowie der Geräte-ausstattung bzw. Parametereinstellungen des verwendeten Spektrometers, insbesondere von Monochromatorbandpass und -spaltbreite des Messkanals. Die erfindungsgemäßen Bandencharakteristika führen somit zu einer Erhöhung der Kalibriersicherheit.

Es ist ferner vorgesehen, sämtliche Farbstoffstandards mit einer Reinheit von mindestens 98%, vorzugsweise von mindestens 99,7% bereitzustellen. Ferner weisen die Farbstoffstandards eine geringe Überlappung ihrer Anregungs- und Emissionsbanden auf. Insbesondere besteht ein Abstand zwischen Anregungs- und Emissionsbanden von mindestens 2000 $cm^{-1}$, insbesondere mindestens 2400 $cm^{-1}$ und im Idealfall von mindestens 2800 $cm^{-1}$. Die Farbstoffstandards weisen darüber hinaus in einem Temperaturbereich von 20 bis 30 °C eine Anisotropie der Fluoreszenz im zu verwendenden Lösungsmittel im UV/vis-Spektralbereich mit $\lambda \leq 700$ nm von höchstens 0,05 und vorzugsweise von höchstens 0,04 auf, im NIR-Spektralbereich von höchsten 15 und vorzugsweise von höchsten 0,07. Weitere Fehlerquellen der Kalibrierung werden dadurch vermieden, dass die vorgeschlagenen Farbstoffstandards im typischen Messtemperaturbereich von 20 bis 30 °C nur eine geringe Temperaturabhängigkeit der Fluoreszenzspektren aufweisen. Die· Farbstoffe sind ferner durch eine hohe thermische und photochemische Stabilität ihrer Reinstoffe und auch ihrer Lösungen gekennzeichnet. Schließlich ist gewährleistet, dass sie unter für statische Photolumineszenzmessungen typischen Mess- und Anregungsbedingungen keine Photoprodukte bilden, die eigene spektrale Beiträge im relevanten Spektralbereich aufweisen. Insbesondere weisen sie einen maximal 10%igen, vorzugsweise maximal 2%igen Abbau der Fluoreszenzbanden bei 5-stündiger Einstrahlung des Lichts einer 150 W-Xenon-Höchstdrucklampe im Bereich des längstwelligen Absorptionsmaximums bei einer Breite des Bandpasses von ca. 15 nm auf, so dass die thermische und photochemische Stabilität ausreichend für die geplanten Anwendungen ist. Insbesondere die Gesamtheit der genannten spektroskopischen und chemischen Eigenschaften der Fluoreszenzstandards gewährleistet eine hohe Kalibriersicherheit und eine Rückführbarkeit nach EN ISO/IEC 17025.

Das Kit kann grundsätzlich eine Mehrzahl unterschiedlicher Emissionsstandards und deren spektral korrigierte Emissionsspektren zur Erstellung einer Gesamtkorrekturfunktion für den Emissionskanal (Emissionskorrekturfunktion) enthalten als auch eine Mehrzahl unterschiedlicher Anregungsstandards und deren korrigierte Anregungsspektren zur Erstellung einer Gesamtkorrekturfunktion für den Anregungskanal (Anregungskorrekturfunktion) umfassen. Bevorzugt umfasst das Kit sowohl Emissions- als auch Anregungsstandards, sowie deren spektral korrigierte Emissions- und Anregungsspektren in elektronischer Form auf einem Datenträger bzw. über das Internet abrufbar.

Ein Satz bevorzugter Emissionsstandards enthält insbesondere aus der Gruppe der Biphenyl-, Naphthalin-, Coumarin-, Oxazin-, Merocyanin-, Hemicyanin- und Styryl-Derivate ausgewählte Verbindungen. Als Anregungsstandards werden bevor zugt Derivate aus der Gruppe enthaltend Biphenyl-, Terphenyl-, Oxadiazol-, Coumarin-, Oxazin-, Merocyanin-, Hemicyanin- und Styryl-Derivate ausgewählt. Nachfolgend werden einige explizite Emissions- und oder Anregungsstandards aufgeführt, die den vorstehend genannten Kriterien entsprechen.

Ein erster bevorzugter Emissions- und/oder Anregungsstandard ist ein Biphenylderivat nach der allgemeinen Formel 1

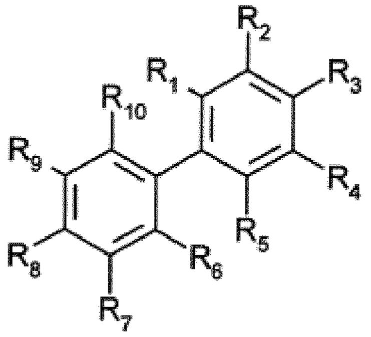

(1),

worin die Reste $R_1$ bis $R_{10}$ unabhängig voneinander einen Wasserstoff-, einen Alkyl- oder Alkoxyrest oder teilweise in Kombination miteinander einen anellierten, gesättigten, hetero- oder homonuklearen Ring bedeuten. Vorzugsweise bedeuten $R_1$ und $R_6$ jeweils einen Alkoxyrest und die übrigen Reste unabhängig voneinander einen Wasserstoff- oder Alkylrest, wobei die Alkoxy- und Alkylgruppen unabhängig voneinander cyclisch oder acyclisch, verzweigt oder unverzweigt sind. Besonders bevorzugt bedeuten $R_1$ und $R_6$ jeweils ein Methoxyrest und die übrigen Reste jeweils ein Wasserstoffrest. Diese Verbindung wird bevorzugt als Emissionsstandard verwendet und weist z. B. in Ethanol eine Emissionsbande von 290 bis 410 nm bei einer Anregungswellenlänge bei 280 nm auf. Die Halbwertsbreite beträgt etwa 4250 $cm^{-1}$ und der Abstand zwischen Anregungs- und Emissionsmaximum ca. 5410 $cm^{-}1$.

Ein zweiter bevorzugter Emissions- und/oder Anregungsstandard ist ein Naphthalinderivat nach der allgemeinen Formel 2

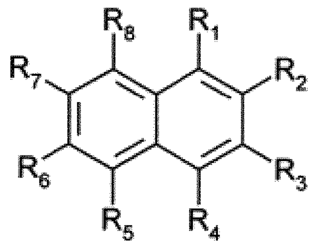

(2),

worin die Reste $R_1$ bis $R_5$ unabhängig voneinander einen Wasserstoff- oder Alkoxyrest oder teilweise in Kombination miteinander einen anellierten, gesättigten, hetero- oder homonuklearen Ring bedeuten. Bevorzugt ist mindestens einer der zwei Naphthalinringe mit zwei Alkoxyresten in einer Spiegelsymmetrieanordnung substituiert (beispielsweise $R_1$ und $R_4$ und/ oder $R_2$ und $R_3$) und die übrigen Reste sind jeweils Wasserstoffe, wobei die Alkoxygruppen acyclisch, verzweigt oder unverzweigt sind und keine Wasserstoffreste in ß-Position relativ zu dem Ethersauerstoffatom aufweisen. Besonders bevorzugt sind $R_1$ und $R_4$ unabhängig voneinander ein Methoxy- oder Neopentyloxyrest und die übrigen Reste jeweils Wasserstoffreste. Diese Verbindungen werden bevorzugt als Emissionsstandard verwendet und weisen z. B. in Ethanol eine Emissionsbande bei etwa 330 bis 500 nm bei einer Anregungswellenlänge bei 320 nm auf. Die Halbwertsbreite beträgt 4400 $cm^{-1}$ und der Abstand zwischen Anregungs- und Emissionsmaximum ca. 4930 $cm^{-1}$.

Ein dritter bevorzugter Emissions- und/oder Anregungsstandard ist ein Cumarinderivat nach der allgemeinen Formel 3

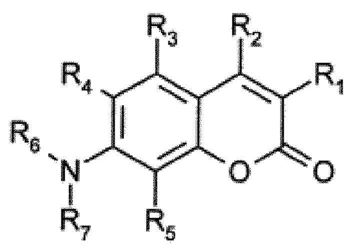

(3),

worin die Reste $R_1$ bis $R_7$ unabhängig voneinander einen Wasserstoff- oder einen unsubstituierten oder substituierte Alkylrest oder teilweise in Kombination miteinander einen anellierten, gesättigten, homonuklearen Ring bedeuten. Insbesondere bedeuten $R_1$ und $R_2$ unabhängig voneinander einen Wasserstoff- oder einen unsubstituierten oder substituierten Alkylrest oder einen anellierten, gesättigten, homonuklearen Ring, $R_3$ bis $R_5$ jeweils einen Wasserstoffrest und

$R_6$ und $R_7$ unabhängig voneinander einen Wasserstoff- oder Alkylrest. Vorzugsweise sind $R_1$ bis $R_5$ jeweils ein Wasserstoffrest und $R_6$ und $R_7$ jeweils eine Ethylgruppe. Diese Verbindung wird als Emissions- und/oder Anregungsstandard verwendet und weist z. B. in Ethanol eine Emissionsbande bei etwa 400 bis 600 nm bei einer Anregungswellenlänge bei 380 nm auf sowie eine Anregungsbande von 325 bis 430 nm bei einer Detektionswellenlänge von 460 nm. Die Halbwertsbreite der Emissionsbande beträgt etwa 2850 $cm^{-1}$ und der Abstand zwischen Anregungs- und Emissionsmaximum ca. 4340 $cm^{-1}$. Die Anregungsbande hat eine Halbwertsbreite von etwa 3780 $cm^{-1}$.

Ein vierter bevorzugter Emissions- und/oder Anregungsstandard ist ein Cumarinderivat nach der allgemeinen Formel 4

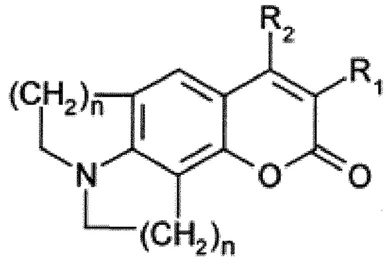

(4),

worin die Reste $R_1$ und $R_2$ unabhängig voneinander einen Wasserstoff- oder einen unsubstituierten oder substituierten Alkylrest oder in Kombination miteinander einen anellierten, gesättigten, homonuklearen Ring bedeuten und n gleich 1 oder 2 ist. Bevorzugt ist $R_1$ ein Wasserstoff, $R_2$ ein unsubstituierter oder substituierter Alkylrest und n jeweils gleich 1 oder 2. Besonders bevorzugt ist $R_1$ Wasserstoff, $R_2$ ein Trifluormethylrest und n jeweils gleich 2. Diese Verbindung wird als Emissions- und/oder Anregungsstandard verwendet und weist z. B. in Ethanol eine Emissionsbande bei etwa 460 bis 700 nm bei einer Anregungswellenlänge bei 420 nm auf sowie eine Anregungsbande von 330 bis 490 nm bei einer Detektionswellenlänge von 530 nm. Die Halbwertsbreite der Emissionsbande beträgt 2890 $cm^{-1}$ und der Abstand zwischen Anregungs- und Emissionsmaximum ca. 4940 $cm^{-1}$. Die Anregungsbande hat eine Halbwertsbreite von etwa 4010 $cm^{-1}$.

Ein fünfter Emissions- und/oder Anregungsstandard ist ein Oxazinderivat, insbesondere ein 3H-Phenoxazin-5-onderivat nach der allgemeinen Formel 5

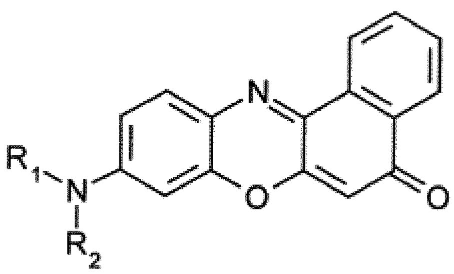

(5),

worin die Reste $R_1$ und $R_2$ unabhängig voneinander einen Wasserstoff- oder einen unsubstituierten oder substituierten n- oder iso-Alkylrest bedeuten. Bevorzugt bedeuten $R_1$ und $R_2$ jeweils einen unsubstituierten, unverzweigten Alkylrest, insbesondere jeweils einen Ethylrest. Die Verbindung wird als Emissions- und/oder Anregungsstandard verwendet und weist z. B. in Ethanol eine Emissionsbande bei etwa 570 bis 750 nm bei einer Anregungswellenlänge von 550 nm auf sowie eine Anregungsbande bei 440 bis 630 nm bei einer Detektionswellenlänge von 630 nm. Die Halbwertsbreite der Emissionsbande beträgt 1630 $cm^{-1}$ und der Abstand zwischen Anregungs- und Emissionsmaximum ca. 2440 $cm^{-1}$. Die Anregungsbande hat eine Halbwertsbreite von etwa 2960 $cm^{-1}$

Ein sechster Emissions- und/oder Anregungsstandard ist ein Merocyaninderivat nach der allgemeinen Formel 6

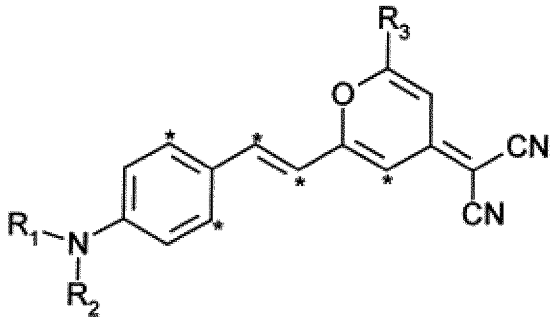

(6),

worin R1, R2 und R3 unabhängig voneinander einen Wasserstoff- oder einen unsubstituierten oder substituierten n- oder iso-Alkylrest bedeuten. Die mit einem Stern gekennzeichneten C-Atome können unabhängig voneinander über eine gesättigte C2- oder C3-Brücke miteinander verbrückt sein, sofern sie sich in 1,3-Stellung zueinander befinden. Bevorzugt sind $R_1$ bis $R_3$ jeweils ein Methylrest und es ist keine Verbrückung vorhanden. Diese Verbindung wird bevorzugt als Emissionsstandard verwendet und weist z.B. in Ethanol eine Emissionsbande bei etwa 530 bis 750 nm bei einer Anregungswellenlänge bei 460 nm auf. In Aceton beträgt die Halbwertsbreite der Emissionsbande 2323 $cm^{-1}$ und der Abstand zwischen Anregung ($\lambda_{ex}$ = 462 nm) und Emissionsmaximum ($\lambda_{max}$ = 62 6 nm) 5670 $cm^{-1}$.

Ein weiterer Emissions- und/oder Anregungsstandard ist ein Styrylderivat, insbesondere ein Hemicyaninderivat nach der allgemeinen Formel 7

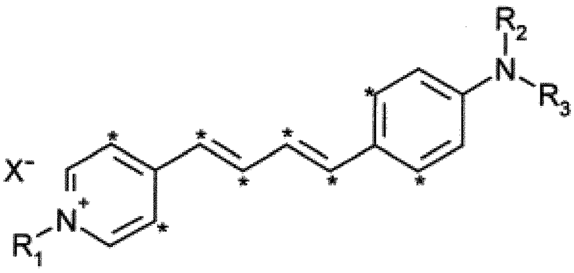

(7),

worin $R_1$ bis $R_3$ unabhängig voneinander einen Wasserstoff- oder einen unsubstituierten oder substituierten n- oder iso-Alkylrest und $X^-$ ein beliebiges Anion bedeuten. Die mit einem Stern gekennzeichneten C-Atome können unabhängig voneinander über eine gesättigte C2- oder C3-Brücke miteinander verbrückt sein, sofern sie sich in 1,3-Stellung zueinander befinden. Bevorzugt sind $R_1$ ein Ethylrest, $R_2$ und $R_3$ jeweils ein Methylrest und $X^-$ ein Perchlorat-Anion und es ist kein verbrückender Ring vorhanden. Diese Verbindung wird bevorzugt als Emissionsstandard verwendet und weist eine Emissionsbande bei etwa 600 bis 800 nm bei einer Anregungswellenlänge bei 500 nm auf. In Aceton beträgt die Halbwertsbreite der Emissionsbande 2008 cm+ und der Abstand zwischen Anregung ($\lambda_{ex}$ = 492 nm) und Emissionsmaximum ($\lambda_{max}$ = 719 nm) 6417 $cm^{-1}$.

Ein weiterer Emissions- und/oder Anregungsstandard ist ein Styrylderivat, insbesondere ein Hemicyaninderivat nach der allgemeinen Formel 8

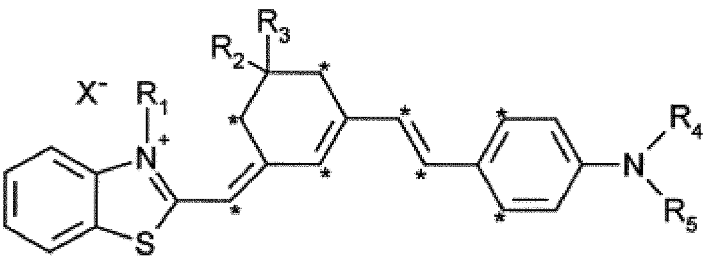

(8),

worin die Reste $R_1$ bis $R_5$ unabhängig voneinander einen Wasserstoff- oder einen unsubstituierten oder substituierten n- oder iso-Alkylrest und X- ein beliebiges Anion bedeuten. Die mit einem Stern gekennzeichneten C-Atome können unabhängig voneinander über eine gesättigte C2- oder C3-Brücke miteinander verbrückt sein, sofern sie sich in 1,3-Stellung zueinander befinden. Bevorzugt sind $R_1$ bis $R_5$ jeweils eine Methylgruppe, X ein Perchlorat-Anion und es liegt keine Brücke vor. Die Verbindung wird bevorzugt als Emissionsstandard verwendet und weist eine Emissionsbande bei

etwa 700 bis 920 nm bei einer Anregungswellenlänge bei 580 nm auf. In Aceton beträgt die Halbwertsbreite der Emissionsbande 1460 $cm^{-1}$ und der Abstand zwischen Anregung ($\lambda_{ex}$ = 564 nm) und Emissionsmaximum ($\lambda_{max}$ = 810 nm) 5380 $cm^{-1}$.

Ein weiterer bevorzugter Emissions- und/oder Anregungsstandard ist p-Terphenyl nach der allgemeinen Formel 9

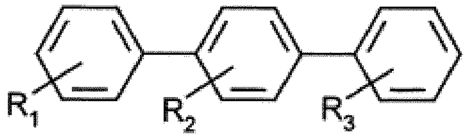
(9),

worin $R_1$ bis $R_3$ unabhängig voneinander Wasserstoff oder ein Alkyl- oder Alkoxyrest bedeuten, vorzugsweise Wasserstoff. Die Verbindung wird bevorzugt als Anregungsstandard verwendet und weist z. B. in Ethanol eine Anregungsbande bei etwa 240 bis 320 nm auf, wenn die Fluoreszenz bei 335 nm detektiert wird. Die Halbwertsbreite der Anregungsbande beträgt 5580 $cm^{-1}$.

Ein weiterer bevorzugter Emissions- und/oder Anregungsstandard ist ein 1,3,4-Oxadiazolderivat nach Formel 10

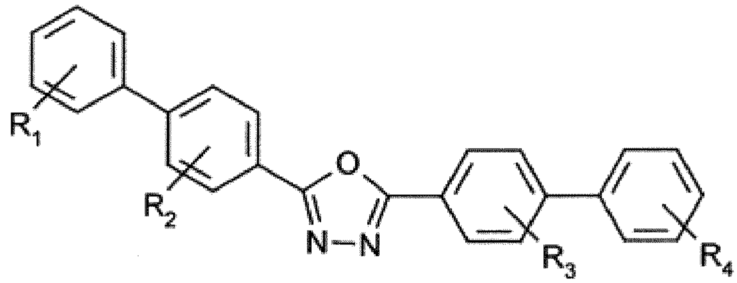
(10),

worin $R_1$ bis $R_4$ unabhängig voneinander Wasserstoff oder ein Alkyl- oder Alkoxyrest bedeuten, vorzugsweise jeweils Wasserstoff. Diese Verbindung wird bevorzugt als Anregungsstandard verwendet und weist z. B. in Acetonitril eine Anregungsbande bei etwa 275 bis 350 nm und ein Emissionsmaximum um 373 nm auf. Die Halbwertsbreite der Anregungsbande beträgt 4880 $cm^{-1}$.

Ein Kit gemäß einer besonders bevorzugten Ausgestaltung umfasst ein Set von Emissionsstandards, der zumindest jeweils einen Fluoreszenzstandard nach den allgemeinen Formeln 1 bis 5 enthält. Ein solcher Kit deckt den Spektralbereich von etwa 310 bis 730 nm ab. Zusätzlich kann dieser

Kalibrierungskit für den Emissionskanal mindestens einen weiteren Emissionsstandard, ausgewählt aus den allgemeinen Formeln 6, 7 und 8 umfassen, um somit die Erstellung einer Gesamtkorrekturfunktion für einen Bereich von ca. 300 bis 950 nm zu ermöglichen.

Ein besonders bevorzugter Kit zur Erstellung einer Gesamtkorrekturfunktion für den Anregungskanal umfasst ein Set von Anregungsstandards, der zumindest jeweils einen Anregungsstandard nach den allgemeinen Formeln 3, 4, 5, 9 und 10 enthält.

Keine der Verbindungen der allgemeinen Formeln 1, 2, 5 bis 10 ist bisher als Fluoreszenzstandards (Emissions- und/oder Anregungsstandards), insbesondere nicht im Zusammenhang mit aufeinander abgestimmten Farbstoffsets, verwendet worden. Aus diesem Grund stellt die Verwendung einer dieser Substanzen zur Kalibrierung eines Lumineszenzmesssystems einen weiteren wichtigen Aspekt der vorliegenden Erfindung dar.

Das erfindungsgemäße Kit bzw. seine Farbstoffstandards können neben der oben beschriebenen spektralen Kalibrierung von Photolumineszenzmessgeräten auch als Fluoreszenzquantenausbeutestandards zur Bestimmung von relativen Fluoreszenzquantenausbeuten im UV /vis/NIR-Spektralbereich verwendet werden, das heißt zur quantitativen Kalibrierung der Intensitäten. Dabei ist die Fluoreszenzquantenausbeute definiert als das Verhältnis der von einer Probe emittierten Anzahl von Photonen zu der von der Probe absorbierten Photonenanzahl. Ferner ist denkbar, das Kit bzw. seine Farbstoffstandards zur Bestimmung des Linearitätsbereichs eines Detektionssystems eines Photolumineszenzmesssystems einzusetzen. Dabei wird der Bereich eines Detektors bestimmt, in dem die von diesem angezeigte Intensität linear mit der eingestrahlten Intensität zunimmt, das heißt in dem eine zuverlässige quantitative Aussage über eine Konzentration eines Chromophors in der Probe möglich ist.

Weitere vorteilhafte Ausgestaltungen der Erfindung sind Gegenstand der übrigen Unteransprüche.

Die Erfindung wird nachfolgend in Ausführungsbeispielen anhand der Abbildungen näher erläutert. Es zeigen:

Figur 1: Emissions- und Anregungsspektren eines erfindungsgemäßen Sets von fünf Emissionsstandards,

Figur 2: Emissionsbanden der Emissionsstandards C und D aus Figur 1;

Figur 3: ein Ablaufdiagramm einesVerfahrens zur Kalibrierung eines Lumineszenzspektrometers unter Verwendung des beschriebenen Kits;

Figur 4: Verlauf korrigierter (zertifizierter) und gemessener Emissionsspektren der Farbstoffstandards A bis E sowie der Teilkorrekturfunktionen und der Gesamtkorrekturfunktion;

Figur 5: Anwendung der Gesamtkorrekturfunktion auf ein Fluoreszenzspektrum von Chininsulfat und

Figur 6: Anwendung der Gesamtkorrekturfunktion auf ein Fluoreszenzspektrum von DCM.

Zur Kalibrierung des Emissionskanals eines Lumineszenzmesssystems, hier eines Fluoreszenzspektrometers (Fluorometer), wird gemäß dem vorliegenden Beispiel ein Set von fünf Fluoreszenzstandards (Emissionsstandards) A, B, C, D und E eingesetzt, wobei A ein Biphenyl-, B ein Naphthalin-, C und D jeweils ein Coumarin- und E ein Oxazinderivat ist. Im konkreten Beispiel handelt es sich um folgende Farbstoffe:

A: 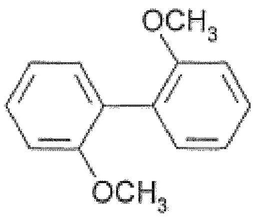 , B: 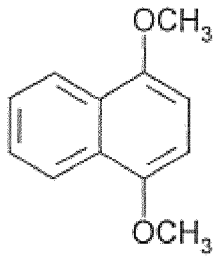 , C: 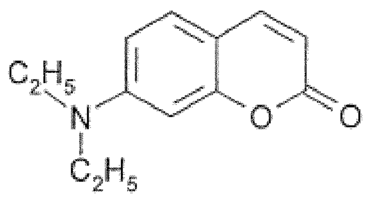

D: 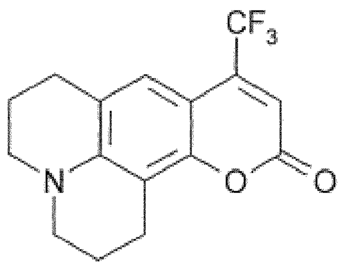 , E: 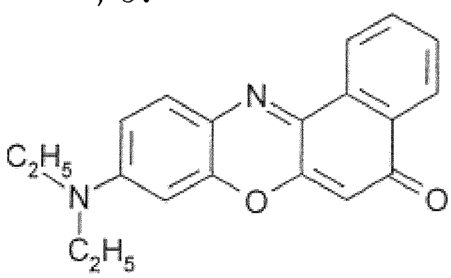

Alle Farbstoffe weisen eine Reinheit von über 99 % auf, sind insbesondere als Feststoff bei Lagerung im Dunklen bei 4 °C in Gegenwart von Luftsauerstoff langzeitstabil. Die luftgesättigten Lösungen sind bei Lagerung im Dunklen bei 4 °C ausreichend langzeitstabil und bilden unter den für Photolumineszenzmessungen typischen Mess- und Anregungsbedingungen keine Photoprodukte, die in dem für die Kalibrierung eingesetzten Spektralbereich absorbieren oder emittieren. Figur 1 zeigt die spektral korrigierten und normierten Emissionsspektren der Emissionsstandards A bis E (oben) sowie die korrigierten und normierten Anregungsspektren der fünf Anregungsstandards AX bis EX. Es ist erkennbar, dass sämtliche Standardspektren einen breiten und unstrukturierten Bandenverlauf mit nur jeweils einem Maximum und keinen Schultern oder Unstetigkeiten in dem, für die Kalibrierung verwendeten Spektralbereich aufweisen. Ferner wurde bei der Auswahl der Fluoreszenzfarbstoffe Wert auf möglichst große Wellenlängenabstände zwischen den Maxima der Emissionsspektren (Em) und denen der dazugehörigen Absorptionsspektren (Abs) gelegt (Stokes-Shift), um die nochmalige Absorption einmal emittierter Photonen aufgrund von Em-Abs-Banden-Überlappung zu vermeiden. Insbesondere beträgt dieser Abstand ca. 5400, 4900, 4300, 4900 und 2400 $cm^{-1}$ für die Farbstoffe A, B, C, D b z w. E. Die Farbstoffe weisen zudem eine geringe Anisotropie mit r = 0,05 (UV/vis-Spektralbereich mit A 700 nm) sowie eine hinreichend geringe Temperaturabhängigkeit der Form der Fluoreszenzbanden im Temperaturbereich zwischen 20°C und 30 °C auf.

Am Beispiel der korrigierten und normierten Emissionsspektren der Fluoreszenzstandards C und D zeigt Figur 2 weitere wesentliche Eigenschaften der ausgewählten Farbstoffe. Zunächst ist erkennbar, dass die Intensität $I(\lambda_{C/D})$ beider Spektren $I_C(\lambda)$ und $I_D(\lambda)$ an ihrem Überschneidungspunkt $\lambda_{C/D}$ größer als 20 % der jeweiligen maximalen (normierten) Intensität $I_C(\lambda_{max})$ und $I_D(\lambda_{max})$ ist. Diese Bedingung wird auch für alle anderen Überschneidungswellenlängen $A_{i/i+1}$ erfüllt. Im vorliegenden Beispiel der Verbindungen A bis E wird für sämtliche Überschneidungspunkte sogar eine

Intensität von mindestens 40 % der Maximalintensitäten eingehalten. Für Farbstoff D ist zudem die Halbwertsbreite $FWHM_D$ angedeutet, die erfindungsgemäß für sämtliche Farbstoffe zumindest im UV/vis-Bereich größer als 1400 cm-1 ist. Vorliegend betragen die Halbwertsbreiten der Emissionsspektren der Verbindungen A bis E etwa 4250, 4400, 2850, 2890 bzw. 1630 $cm^{-1}$.

Der Spektralbereich der vorgestellten Standardkombinationen kann durch die Integration weiterer Farbstoffe wie z.B. der genannten Merocyanin- und Styrylverbindungen gemäß den oben beschriebenen allgemeinen Strukturen 6, 7 und 8 in den NIR-Spektralbereich ausgedehnt werden. Hier gelten analoge Auswahl- und Anforderungskriterien, wobei im Bereich bei $\lambda > 700$ nm lediglich eine Mindestintensität an den Überlappungspunkten von insbesondere mindestens 12 % der Maximalintensität, eine Halbwertsbreite von insbesondere mindestens 1200 $cm^{-1}$ sowie eine Anisotropie von insbesondere $r \leq 0{,}07$ gefordert wird.

Der Ablauf des Kalibrierverfahrens ist in Figur 3 in Verbindung mit Figur 4 dargestellt. Beginnend in Schritt SI gemäß Figur 3 erfolgt zunächst die Aufnahme der Rohemissionsspektren $J_i^R(\lambda)$ der fünf (oder mehr) oben genannten, im Kit enthaltenen Fluoreszenzstandards A bis E mit dem zu kalibrierenden Messsystem. Die Messbedingungen am Photolumineszenzmessgerät - wie Spaltbreiten, Detektorspannungen, Scanmodus und -geschwindigkeit, Filter, Polarisatoren und Polarisatorwinkel etc. - werden auf die Parameter eingestellt, unter denen gewöhnlich Fluoreszenzspektren aufgenommen werden bzw. für die spektral korrigierte Lumineszenzspektren benötigt werden. Unter den Bedingungen jeder Farbstoffmessung wird auch jeweils ein Blindwertspektrum $J_i^B(\lambda)$ des verwendeten Lösungsmittels gemessen.

Die folgende, nutzerfreundliche Berechnung einer Gesamtkorrekturfunktion für das Fluorometer erfolgt durch einen Programmalgorithmus, der die anschließenden Schritte ausführt. Im nachfolgenden Schritt S2 werden die gemessenen Rohspektren $J_i^R(\lambda)$ und die Blindwertspektren $J_i^B(\lambda)$ vom Programm eingelesen. Das Programm erwartet mindestens 2 oder mehr gemessene Fluoreszenzspektren spektral aufeinander folgender Farbstoffe und der dazugehörigen Blindwertspektren im ASCII-DAT- oder -CSV-Format. Es unterstützt spektrale Schrittweiten $\Delta\lambda(J_i)$ der Messpunkte zwischen 0,1 und 10 nm, wobei Schrittweiten zwischen 0,5 und 2,0 nm bevorzugt werden.

In Schritt S3 werden die eingelesenen Spektren durch verschiedene Subroutinen analysiert. Diese umfassen beispielsweise eine Überprüfung der Spektren hinsichtlich ihrer Formatkompatibilität und gegebenenfalls ihre Umwandlung in ein vorn Programm lesbares Format, ihre Sortierung hinsichtlich des Wellenlängenbereichs und Zugehörigkeit zur Farbstoffgruppe bzw. zur Blindwertgruppe. Zudem werden in diesem Schritt alle Spektrenbereiche unterhalb einer Intensitätsschwelle von 5 % bezogen auf die zugehörige Maximalintensität abgeschnitten. Eine weitere Routine ordnet die gemessenen Spektren $J_i(\lambda)$ den entsprechenden zertifizierten Spektren $I_i$ $(\lambda)$ zu.

In Schritt S4 erfolgt die Blindwertkorrektur, indem die Lösungsmittelspektren $J_i^B(\lambda)$ von den jeweiligen gemessenen Spektren $J_i^R(\lambda)$ subtrahiert werden, wobei die blindwertkorrigierten, gemessenen Spektren $J_i(\lambda)$ erhalten werden. Die Blindwertkorrektur erfolgt nur, wenn die Routine eine Übereinstimmung aller Spektrengrenzen ($\lambda_{Start}$ und $\lambda_{Ende}$) der Farbstoffspektren $J_i^R(\lambda)$ mit denen der Blindwertspektren $J_i^B(\lambda)$ feststellt. Andernfalls geht das Programm davon aus, dass die Blindwertkorrektur bereits durch den Anwender ausgeführt wurde und gibt einen entsprechenden Hinweis im Logfile aus.

Anschließend werden in Schritt S5 die spektral korrigierten und zertifizierten Spektren Ii(~) für die fünf Fluoreszenzstandards zusammen mit ihren kombinierten Unsicherheiten aus einem Binärfile eingelesen. Die Spektren $I_i$ $(\lambda)$ wurden mit einem rückführbar kalibrierten Fluoreszenzspektrometer mit bekannter Messunsicherheit gemessen, blindwert- und spektral korrigiert und sind damit geräteunabhängig und rückführbar auf die radiometrischen Primärnormale "Schwarzer Strahler" oder "Kryoradiometer". Da für alle Einzelschritte bei der Gewinnung der Fluoreszenzkurven und für die benutzten Zertifikate Fehlerbilanzen aufgestellt wurden, kann für die Fluoreszenzstandards eine kombinierte wellenlängenahängige Unsicherheit der gemessenen Intensitäten angegeben werden.

In Schritt S6 wird - sofern erforderlich - die Scan-Schrittweite $\Delta\lambda_I$ der zertifizierten Spektren $I_i$ $(\lambda)$ an die Scan-Schrittweite $\Delta\lambda_J$ der gemessenen Spektren $J_i(\lambda)$ angepasst. Dafür wird unter Verwendung einer Polynomfunktion dritten Grades (Spline) eine Interpolation der fehlenden Zwischenwerte $I_i(\lambda_k)$ zwischen jeweils acht aufeinander folgenden vorhandenen Datenpunkten (k-3... k... k+4) der Fluoreszenzstandards im (kleineren) Abstand $\Delta\lambda_I$ vorgenommen. Das Spline-Fenster wird nacheinander über alle Punkte eines jeden Spektrums $I_i(\lambda)$ bewegt. Im Ergebnis stehen die zertifizierten Spektren $I_i(\lambda)$ und die blindwertkorrigierten Spektren $J_i(\lambda)$ auf der gleichen Basis $\Delta\lambda$.

Figur 4 zeigt im unteren Teil die bei einer Kalibrierung am Fluorometer Perkin-Elmer LS 50 B erhaltenen Kurven der blindwertkorrigierten Emissionsspektren $J_i(\lambda)$ (unterbrochene Linien) sowie die der zertifizierten, intensitätsnormierten Emissionsspektren $I_i(\lambda)$ (durchgezogene Linien).

Nachfolgend wird in Schritt S7 gemäß Figur 3 eine auf den Bereich der Maxima eingeschränkte Analyse der Signal-/Rauschverhältnisse S/N der gemessenen Spektren $J_i(\lambda)$ durchgeführt. Die statistische Datenqualität spielt insofern eine Rolle, als dass das Rauschen der gemessenen Kurven direkt an die zu erstellende spektrale Korrekturfunktion weitergegeben wird und somit auch bei der spektralen Korrektur in ein jedes gemessene Spektrum einfließt. Für alle gemessenen Spektren $J_i(\lambda)$ werden im Bereich ihrer Maxima (Flankenintensität 97...100...97%) Parameter für Polynomgleichungen bis max. 9. Grades durch Auflösen der Matrices abgeschätzt. Für jeden Farbstoff i wird das Polynom mit der geringsten Abweichung von den Messdaten (Fehlerquadratsumme) als die dem Spektrum zugrunde liegende

"rauschfreie wahre Kurve" angenommen. Die reziproke Standardabweichung der Messpunkte von der jeweils besten Polynomkurve wird als Rauschmaß im Bereich um das jeweilige Bandenmaximum angesehen. Liegt dieses unter dem empirisch vereinbarten Wert von beispielsweise 1000, so wird im Logfile eine Empfehlung vermerkt, wie oft der Benutzer die Messung des jeweiligen Chromophors wiederholen sollte, um zu einer Gesamtkorrekturfunktion mit hinreichend geringer Streuung zu gelangen.

Anschließend geht das Programm zu Schritt S8 über, wo eine Bestimmung der Überschneidungspunkte (genauer Überschneidungswellenlängen) $\lambda_{i/i+1}$ von jeweils zwei spektral aufeinander folgenden Emissionsspektren erfolgt (vgl. Fig. 2). Der Überschneidungspunkt $\lambda^{I}_{i/i+I}$ (bzw. $A^{J}_{i/i+I}$) zweier Spektren ist diejenige Wellenlänge, an der sich die Intensität des normierten vorausgehenden (abnehmenden) Spektrums dem normierten nachfolgenden (zunehmenden) Spektrum am weitesten annähert, d. h. wo die Kurven einander kreuzen. Der Überschneidungspunkt $\lambda_{i/i+1}$ (z.B. $\lambda_{A/B}$) wird für jeweils einander überschneidende Spektrenpaare sowohl für die gemessenen Spektren $J_i(\lambda)/J_{i+I}(\lambda)$: $\lambda^{J}_{i/i+1}$ (z.B. $J_A(\lambda)$, $J_B(\lambda)$) als auch die entsprechenden zertifizierten Spektren $I_i(\lambda)/I_{i+I}(\lambda)$ : $\lambda^{I}_{i+I}$ (z.B. $I_A(\lambda)$, $I_B(\lambda)$) bestimmt und gemittelt. Der Überschneidungspunkt $A_{i/i+1}$ aus beiden Paaren ergibt sich als nächster aufgerundeter, in allen vier benachbarten Spektren belegter Wellenlängenwert zum Mittel aus den beiden Paar-Mittelwerten $\lambda^{I}_{i/i+I}$ und $\lambda^{J}_{i/i+I}$.

Dann werden in Schritt S9 Verknüpfungsfaktoren $\alpha$i für jeden Farbstoff i durch statistische Mittelung einander überlappender Spektralbereiche im Bereich ±L\A um die jeweilige Überschneidungswellenlänge $A_{i/i+1}$ aller vier benachbarten Spektren $I_i(\lambda)$, $I_{i+I}(\lambda)$, $J_i(\lambda)$ und $J_{i+I}(\lambda)$ gemäß den Gleichungen 1 bis 3 ermittelt. In diesem Schritt erfolgt implizit die Berechnung der Teilkorrekturfunktionen $F_i(\lambda)$ gemäß Gleichung 2 durch Quotientenbildung der korrigierten Spektren $I_i(\lambda)$ und der korrespondierenden gemessenen Spektren $J_i(\lambda)$ für die einzelnen Fluoreszenzstandards i. Die Verläufe der (ungewichteten) Teilkorrekturspektren $F_A(\lambda)$ bis $F_E(\lambda)$ für die Standards A bis E sind im oberen Teil der Figur 4 dargestellt.

$$\alpha_{i+1} = \frac{\sum_{\lambda}\left[\frac{F_i(\lambda)}{F_{i+1}(\lambda)} \Big/ \sigma^2_{i/i+1}(\lambda)\right]}{\sum_{\lambda} 1/\sigma^2_{i/i+1}(\lambda)} \qquad (1)$$

$$F_i(\lambda) = \frac{I_i(\lambda)}{J_i(\lambda)} \qquad (2)$$

$$\sigma^2_{i/i+1}(\lambda) = \left[\frac{1}{J_i(\lambda)} + \frac{1}{J_{i+1}(\lambda)}\right] \cdot \left[\frac{F_i(\lambda)}{F_{i+1}(\lambda)}\right]^2 \qquad (3) \quad (3$$

Für den ersten Verknüpfungsfaktor gilt $\alpha_I \equiv I$. Dabei wird der Summand in Gleichung 1 für den Verknüpfungsfaktor $\alpha_{i+I}$ nur jeweils über einen vorgegebenen optimierten spektralen Überlappungsbereich $\pm\Delta\lambda_{OL}$ um die jeweilige Überschneidungswellenlänge $\lambda_{i/i+I}$ ermittelt. Im vorliegenden Beispiel erfolgt die statistische Mittelung zur Berechnung von $\alpha_{i+I}$ gemäß Gleichung 1 über einen beidseitig an die jeweiligen Überschneidungswellenlängen $\lambda_{i/i+I}$ anschließenden Bereich von ±8 nm. Wenn beispielsweise der Überschneidungspunkt $\lambda_{A/B}$ bei 350 nm liegt, wird $\alpha_B$ durch statistische Mittelung der Teilkorrekturfunktionen $F_A(\lambda)$ und $F_B(\lambda)$ über den Bereich 350 ± 8 nm ermittelt.

In Schritt S10 werden Anschlussfaktoren $\beta_i$ für jeden Fluoreszenzstandard i gemäß Gleichung 4 durch Multiplikation aller spektral vorhergehender Verknüpfungsfaktoren $\alpha_i$ ermittelt. Aus $\alpha_i \equiv 1$ folgt $\beta_I = I$.

$$\beta_i = \prod_{k=1}^{i} \alpha_k \qquad (4)$$

Schließlich erfolgt in den Schritten S11 bis S13 die Berechnung der Gesamtkorrekturfunktion $F(\lambda)$. Obwohl diese Schritte gemäß dem verwendeten Programmalgorithmus keine voneinander separierten Schritte darstellen (sondern einen einzigen Rechenschritt bestehend in der Summation nach Gleichung 5), sind S11 bis S13 in Figur 3 für ein

besseres Verständnis als getrennte Schritte dargestellt. Demnach werden in Schritt S11 zunächst die Werte der Funktion F(λ) in einem vorgebbaren Verknüpfungsbereich $A_{i/i+1} \pm\Delta\lambda_{LK}$ um die jeweiligen Überschneidungspunkte $\lambda_{i/i+1}$ gemäß den Gleichungen 5 und 6 ermittelt. In dem Verknüpfungsbereich $\lambda_{i/i+1} \pm\Delta\lambda_{LK}$ erfolgt somit eine statistische Mittelung der einander jeweils überlappenden, durch ßi gewichteten Teilkorrekturfunktionen Fi(A). Im vorliegenden Beispiel wird gemäß einem voreingestellten Ausführungsmodus des Programms Gleichung 5 jeweils nur genau für die in S8 ermittelten Überschneidungswellenlängen $A_{i/i+1}$ angewendet, das heißt $\Delta\lambda_{LK} = 0$.

$$F(\lambda) = \frac{\sum_{i=1}^{N} \beta_i \cdot F_i(\lambda)/\sigma^2(\lambda)}{\sum_{i=1}^{N} 1/\sigma^2(\lambda)} \qquad (5)$$

mit

$$\sigma^2(\lambda) = \frac{[\beta_i F_i(\lambda)]^2}{J_i(\lambda)} \qquad (6)$$

Alle anderen Punkte der Korrekturfunktion F(A), das heißt in den Bereichen $\lambda \neq A_{i/i+I} \pm\Delta\lambda_{LK}$, werden nach Schritt S12 gemäß dem voreingestellten Ausführungsmodus des Programms nicht gemittelt, sondern einfach nach Gleichung 7 berechnet. (Dies ist gleichbedeutend mit einer Summierung nach Gleichung 5 über nur ein i.) Mit anderen Worten entspricht die Gesamtkorrekturfunktion F(A) außerhalb der Verknüpfungsbereiche $A_{i/i+I} \pm\Delta\lambda_{LK}$, insbesondere für alle Wellenlängen außerhalb der Überschneidungspunkte $\lambda_{i/i+I}$, den Teilkorrekturfunktionen Fi(A), gewichtet mit den für diese ermittelten Faktoren $\beta_i$.

$$F(\lambda) = \beta_i \cdot F_i(\lambda) \qquad (7)$$

Mit der Übergabe entsprechender Steuervariablen durch den Anwender lässt sich der Wirkungsbereich der Gleichungen 5 und 6 im Programm optional auch auf breitere spektrale Verknüpfungsbereiche $\lambda_{i/i+1} \pm\Delta\lambda_{LK}$ um die Schnittwellenlängen ausweiten. Dass dies aber häufig nicht von Vorteil ist, ist dem Beispieldatensatz in Figur 4 (oben) zu entnehmen, wo die Teilkorrekturfunktionen $F_C(\lambda)$ und $F_D(\lambda)$ jeweils an ihren Anfängen und der Teilquotient $F_E(\lambda)$ am Ende deutliche Abweichungen vom stetigen Verhalten der Kurven in ihrem sonstigen Verlauf zeigen. Für die in Figur 4 oben ebenfalls dargestellte Emissionskorrekturfunktion F(λ) wurde deshalb das Programm im Default-Mode benutzt, das heißt, lediglich die dunkel unterlegten Teile der Einzelquotienten $F_i(\lambda)$ zwischen den Schnittwellenlängen $A_{i/i+1}$ wurden mit den Anschlussfaktoren $\beta_i$ gemäß Gleichung 7 verrechnet und an den Schnittstellen $A_{i/i+I}$ wurde zwischen den beiden angrenzenden Teilquotienten gemäß Gleichung 5 gemittelt und so die Gesamtkorrekturfunktion F(λ) (schwarze Linie) erhalten. Sie weist erkennbar einen glatten stetigen Verlauf auf. Wegen ($\alpha_i$ =1 und $\beta_i$=I entspricht F(λ) bis zum ersten Überschneidungspunkt $\lambda_{A/B}$ der mit $\beta_A$ gewichteten Teilkorrekturfunktion $F_A(\lambda)$.

In Schritt S13 werden die Werte der verketteten Gesamtkorrekturfunktion F(λ) als ASCII-Tabelle im File "CorrF.TXT" ausgegeben und in einem Logfile "LINKLOG#.TXT" alle Aktionen sowie Fehlermeldungen des Programms dokumentiert.

Alle auf einem in dieser Weise kalibrierten Lumineszenzspektrometer und unter den Kalibriereinsteilungen gemessenen Spektren werden - nach Subtraktion entsprechender Blindwertspektren - durch einfache Multiplikation mit der Korrekturfunktion F(λ) spektral korrigiert. Werte von gemessenem Spektrum und der spektralen Korrekturfunktion F(λ) dürfen nur miteinander multipliziert werden, wenn sie der gleichen Wellenlänge zugeordnet sind, das heißt der gleichen Basis Δλ. Man erhält auf diese Weise rückführbare, spektral korrigierte Lumineszenzspektren in relativen Intensitätseinheiten.

Das vorbeschriebene Beispiel bezieht sich auf die Erstellung einer Gesamtkorrekturfunktion für die Emission unter Verwendung von Emissionsstandards. Wird ein Satz von Anregungsstandards auf einem Lumineszenzspektrometer auf gleiche Weise gemessen und die erhaltenen Anregungsspektren mit einem Datensatz für die spektral korrigierten (zertifizierten) Anregungsspektren der Fluoreszenzstandards entsprechend dem Programmablauf in Figur 3 verrechnet, so wird eine spektrale Anregungskorrekturfunktion erhalten.

Figur 5 zeigt am Beispiel der Fluoreszenz von Chininsulfat die Anwendung der gemäß den Figuren 3 und 4 erhaltenen Gesamtkorrekturfunktion F($\lambda$). Die durchgezogene Kurve zeigt das auf einem Fluorometer (SPEX Fluorolog) bei einer Anregungswellenlänge von 348 nm gemessene, spektral unkorrigierte, blindwertkorrigierte Emissionsspektrum J(A). Nach Multiplikation mit der für das Fluorometer durch Anwendung des erfindungsgemäßen Fluoreszenzstandard-Kits erhaltenen Emissionskorrekturfunktion F(A) wurde das spektral korrigierte Emissionsspektrum (gepunktete Kurve) erhalten. Es liegt im Unterschied zum spektral unkorrigierten Spektrum in allen Bereichen innerhalb der vom NIST vorgegebenen Fehlergrenzen (graue Dreiecke).

In Figur 6 wird deutlich, welchen Einfluss die spektrale Korrektur auf die spektrale Lage des Fluoreszenzmaximums haben kann. Das Rohemissionsspektrum J(A) von DCM in Acetonitril wurde auf einem Fluorometer LS 50 B der Firma Perkin Elmer aufgenommen. Durch die spektrale Emissionskorrektur (Multiplikation des gemessenen Rohspektrums J(A) mit der Emissionskorrekturfunktion F(A) wird das um 11 nm bathochrom verschobene, spektral korrigierte Spektrum erhalten (gepunktete Kurve). Sie weicht nur geringfügig von dem Spektrum ab, das mit dem Fluorometer SLM 8100 gemessen wurde und mit einer mittels Strahldichte-Transfernormal erstellten Emissionskorrekturfunktion $F(\lambda)_{tr}$ spektral korrigiert wurde (graue Kurve).

**Bezugszeichen-/Abkürzungsliste**

| | |
|---|---|
| i | fortlaufende Nr. eines Fluoreszenzstandards im Kit mit $1 \leq i \leq N$ |
| $I_i (\lambda)$ | spektral korrigiertes (zertifiziertes) Fluoreszenzspektrum des Fluoreszenzstandards i |
| $J_i(\lambda)$ | gemessenes, blindwertkorrigiertes Fluoreszenzspektrum |
| $F_i(\lambda)$ | Teilkorrekturfunktion des Fluoreszenzstandards i |
| F(A) | Gesamtkorrekturfunktion |
| $\lambda_{i/i+1}$ | Überschneidungswellenlängen aufeinander folgender Spektren des i-ten und (i+1)-ten Standards |
| $\alpha_i$ | Verknüpfungsfaktor benachbarter Teilkorrekturfunktionen |
| $\beta_i$ | Anschlussfaktor |
| $\lambda_{i/i+1} \pm \Delta\lambda_{OL}$ | spektraler Überlappungsbereich um die Überschneidungswellenlängen |
| $A_{i/i+1} \pm \Delta\lambda_{LK}$ | spektraler Verknüpfungsbereich um die Überschneidungswellenlängen |

**Patentansprüche**

**1.** Kit zur rückführbaren Kalibrierung eines Photolumineszenzmesssystems, umfassend:

a) mindestens jeweils einen der folgenden Fluoreszenzstandards (i)

- ein Biphenylderivat nach der allgemeinen Formel (1)

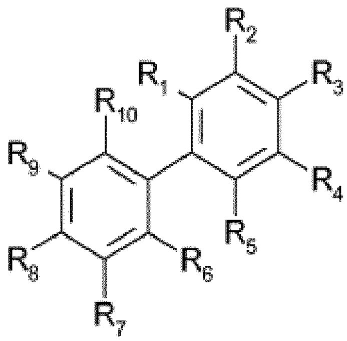

(1),

worin $R_1$ und $R_6$ jeweils einen Alkoxyrest bedeuten und die übrigen Reste unabhängig voneinander einen Wasserstoff- oder Alkylrest bedeuten, wobei die Alkoxy- und Alkylreste unabhängig voneinander cyclisch oder acyclisch, verzweigt oder unverzweigt sind;
- ein Naphthalinderivat nach der allgemeinen Formel (2)

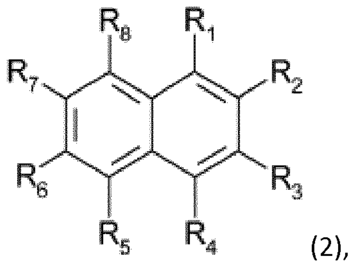

(2),

worin die Reste $R_1$ bis $R_8$ unabhängig voneinander einen Wasserstoff- oder Alkoxyrest oder teilweise in Kombination miteinander einen anellierten, gesättigten, hetero- oder homonuklearen Ring bedeuten;
- ein 3H-Phenoxazin-5-on-Derivat nach der allgemeinen Formel (5)

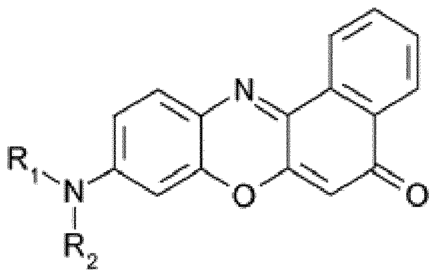

(5),

worin die Reste $R_1$ und $R_2$ unabhängig voneinander einen Wasserstoff- oder einen unsubstituierten oder substituierten n- oder iso-Alkylrest bedeuten;
- ein Hemicyaninderivat nach der allgemeinen Formel (8)

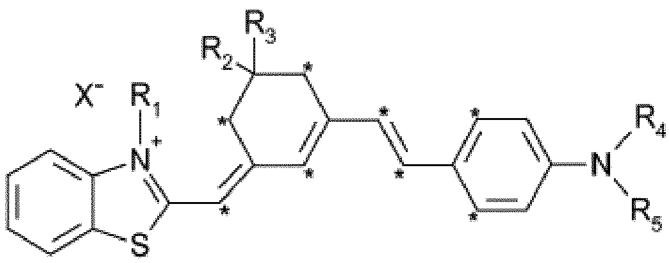

(8),

worin die Reste $R_1$ bis $R_5$ unabhängig voneinander einen Wasserstoff- oder einen unsubstituierten oder substituierten n- oder iso-Alkylrest und X- ein beliebiges Anion bedeuten und die mit einem Stern gekennzeichneten C-Atome unabhängig voneinander über eine gesättigte C2-oder C3-Brücke untereinander verbrückt sein können;

- ein p-Terphenyl nach der allgemeinen Formel (9)

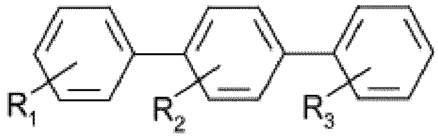

(9)

worin $R_1$ bis $R_3$ unabhängig voneinander Wasserstoff oder ein Alkyl- oder Alkoxyrest bedeuten, insbesondere Wasserstoff;

- ein 1,3,4-Oxadiazolderivat nach der allgemeinen Formel (10)

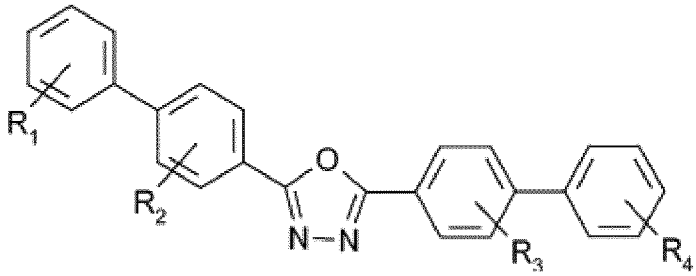

(10),

worin $R_1$ bis $R_4$ unabhängig voneinander Wasserstoff oder ein Alkyl- oder Alkoxyrest bedeuten, insbesondere Wasserstoff; und

- ein Hemicyaninderivat nach der allgemeinen Formel (7)

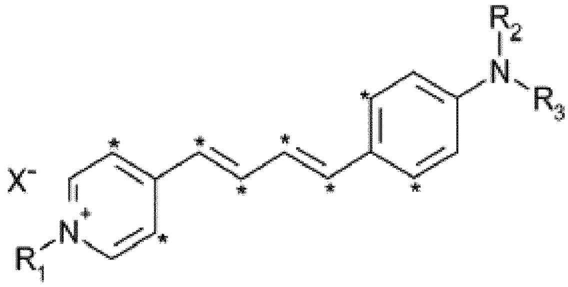

(7),

worin $R_1$ bis $R_3$ unabhängig voneinander einen Wasserstoff- oder einen unsubstituierten oder substituierten n- oder iso-Alkylrest bedeuten, $X^-$ ein beliebiges Anion bedeutet und die mit einem Stern gekennzeichneten C-Atome unabhängig voneinander über eine gesättigte C2- oder C3-Brücke untereinander verbrückt sein können; und

(b) korrigierte Fluoreszenzspektren ($I_i(\lambda)$) der Fluoreszenzstandards (i) in computerlesbarer Form und/oder eine Angabe einer Internetseite, auf welcher die korrigierten Fluoreszenzspektren ($I_i(\lambda)$) abrufbar sind,

wobei die Fluoreszenzstandards (i) derart gewählt sind, dass ihre spektral korrigierten Fluoreszenzspektren ($I_i(\lambda)$) zusammen einen vorgegebenen Spektralbereich abdecken derart, dass im UV/vis-Spektralbereich mit $\lambda \leq 700$ nm Fluoreszenzbanden der korrigierten, jeweils spektral aufeinander folgenden Fluoreszenzspektren ($I_i(\lambda)$) an ihren Überschneidungswellenlängen ($\lambda_{i/(i+1)}$) eine vorgegebene Mindestintensität zumindest von 20 % der jeweiligen maximalen Bandenintensität aufweisen, ihre Fluoreszenzbanden jeweils eine Halbwertsbreite (FWHM) zumindest von 1400 $cm^{-1}$ aufweisen sowie einen unstrukturierten, schulterfreien Bandenverlauf mit jeweils nur einem Maximum im relevanten Spektralbereich bei einer spektralen Auflösung von 1 nm.

**2.** Kit nach Anspruch 1,
worin in der allgemeinen Formel (1) $R_1$ und $R_6$ jeweils einen Methoxyrest bedeuten und die übrigen Reste jeweils

einen Wasserstoffrest.

3. Kit nach einem der vorhergehenden Ansprüche, worin in der allgemeinen Formel (2) mindestens einer der zwei Naphthalinringe mit zwei Alkoxyresten in einer Spiegelsymmetrieposition substituiert ist und die übrigen Reste jeweils Wasserstoff sind, wobei die Alkoxyreste acyclisch, verzweigt oder unverzweigt sind und keinen Wasserstoffreste in β-Position relativ zu dem Ethersauerstoffatom aufweisen.

4. Kit nach einem der vorhergehenden Ansprüche, worin in der allgemeinen Formel (2) $R_1$ und $R_4$ unabhängig voneinander ein Methoxy- oder Neopentyloxyrest sind und die übrigen Reste jeweils Wasserstoffreste sind.

5. Kit nach einem der vorhergehenden Ansprüche, worin in der allgemeinen Formel (5) $R_1$ und $R_2$ jeweils einen unsubstituierten, unverzweigten Alkylrest, insbesondere jeweils einen Ethylrest bedeuten.

6. Kit nach einem der vorhergehenden Ansprüche, worin in der allgemeinen Formel (7) $R_1$ ein Ethylrest, $R_2$ und $R_3$ jeweils ein Methylrest und $X^-$ ein Perchlorat-Anion ist und keine C2- oder C3-Brücke vorhanden ist.

7. Kit nach einem der vorhergehenden Ansprüche, worin in der allgemeinen Formel (8) $R_1$ bis $R_5$ jeweils eine Methylgruppe sind, $X^-$ ein Perchlorat-Anion ist und keine C2- oder C3-Brücke vorhanden ist.

8. Kit nach einem der vorhergehenden Ansprüche, ferner enthaltend als einen Fluoreszenzstandard (i) ein Cumarinderivat nach der allgemeinen Formel (3)

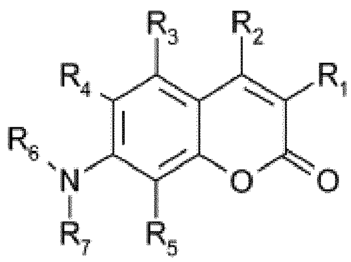

(3)

worin die Reste $R_1$ bis $R_7$ unabhängig voneinander einen Wasserstoff- oder einen unsubstituierten oder substituierten Alkylrest oder teilweise in Kombination miteinander einen anellierten, gesättigten, homonuklearen Ring bedeuten.

9. Kit nach Anspruch 8, worin in der allgemeinen Formel (3) $R_1$ und $R_2$ unabhängig voneinander einen Wasserstoff- oder einen unsubstituierten oder substituierten Alkylrest oder einen anellierten, gesättigten, homonuklearen Ring bedeuten, $R_3$ bis $R_5$ jeweils einen Wasserstoffrest und $R_6$ und $R_7$ unabhängig voneinander einen Wasserstoff- oder Alkylrest bedeuten.

10. Kit nach Anspruch 8 oder 9, worin in der allgemeinen Formel (3) $R_1$ bis $R_5$ jeweils ein Wasserstoffrest und $R_6$ und $R_7$ jeweils eine Ethylgruppe sind.

11. Kit nach einem der vorhergehenden Ansprüche, ferner enthaltend als einen Fluoreszenzstandard (i) ein Cumarinderivat nach der allgemeinen Formel (4)

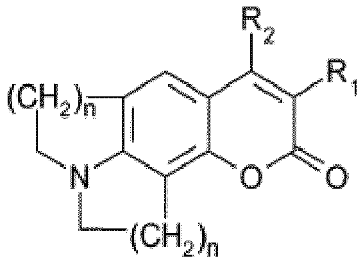

(4)

worin die Reste $R_1$ und $R_2$ unabhängig voneinander einen Wasserstoff- oder einen unsubstituierten oder substituierten Alkylrest oder in Kombination miteinander einen anellierten, gesättigten, homonuklearen Ring bedeuten und n gleich 1 oder 2 ist.

**12.** Kit nach Anspruch 11,
worin in der allgemeinen Formel (4) $R_1$ einen Wasserstoffrest und $R_2$ einen unsubstituierten oder substituierten Alkylrest bedeutet und n jeweils gleich 1 oder 2 ist.

**13.** Kit nach Anspruch 11 oder 12,
worin in der allgemeinen Formel (4) $R_1$ ein Wasserstoffrest und $R_2$ ein Trifluormethylrest und n jeweils gleich 2 ist.

**14.** Kit nach einem der vorangehenden Ansprüche,
ferner enthaltend als einen Fluoreszenzsstandard (i) ein Styrylderivat nach der allgemeinen Formel (6)

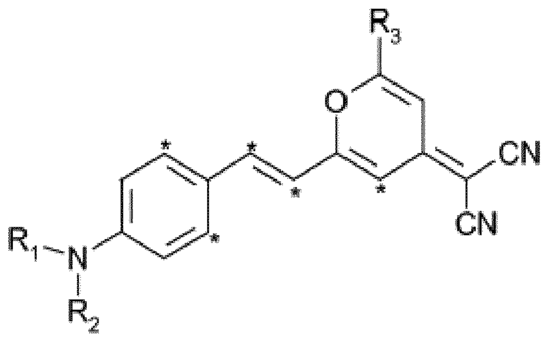

(6)

worin $R_1$, $R_2$ und $R_3$ unabhängig voneinander einen Wasserstoff- oder einen unsubstituierten oder substituierten n-oder iso-Alkylrest bedeuten und die mit einem Stern gekennzeichneten C-Atome unabhängig voneinander über eine gesättigte C2- oder C3-Brücke untereinander verbrückt sein können.

**15.** Kit nach Anspruch 14,
worin in der allgemeinen Formel (6) $R_1$ bis $R_3$ jeweils ein Methylrest ist und keine C2- oder C3-Brücke vorhanden ist.

**16.** Kit nach einem der Ansprüche 11 bis 15, wobei
der Kit zumindest jeweils einen Fluoreszenzemissionsstandard (i) nach den allgemeinen Formeln (1) bis (5) umfasst.

**17.** Kit nach einem der Ansprüche 14 bis 16, wobei
der Kit jeweils einen Fluoreszenzemissionsstandard (i) nach den allgemeinen Formeln (1) bis (5) sowie mindestens einen weiteren Fluoreszenzemissionsstandard (i) ausgewählt aus den allgemeinen Formeln (6), (7) und (8) umfasst.

**18.** Kit nach einem der Ansprüche 11 bis 17, wobei
der Kit zumindest jeweils einen Fluoreszenzanregungsstandard (i) nach den allgemeinen Formeln (3), (4), (5), (9) und (10) umfasst.

**19.** Verwendung eines Kits nach einem der vorangehenden Ansprüche zur Kalibrierung eines Lumineszenzmesssystems, insbesondere eines Fluoreszenzmesssystems, wobei mindestens eine der folgenden Funktionen ausgeführt wird:

(a) spektrale Kalibrierung des Lumineszenzmesssystems,
(b) Bestimmung von relativen Fluoreszenzquantenausbeuten im UV/vis/NIR-Spektralbereich, und
(c) Bestimmung des Linearitätsbereichs eines Detektionssystems des Lumineszenzmesssystems.

**20.** Verfahren zur rückführbaren Kalibrierung eines Photolumineszenzmesssystems, umfassend:

(A) Bereitstellen eines Kits nach einem der Ansprüche 1 bis 18;
(B) Messung von Fluoreszenzspektren ($J_i(\lambda)$) einer Mehrzahl von Fluoreszenzstandards (i) aus dem Kit mit dem zu kalibrierenden Photolumineszenzmesssystem;
(C) Berechnung von Verknüpfungsfaktoren ($\alpha_i$) durch statistische Mittelung aufeinander folgender, überlappender Teilkorrekturfunktionen ($F_i(\lambda)$), welche durch Quotientenbildung aus den gemessenen Fluoreszenzspektren ($J_i(\lambda)$) und den entsprechenden korrigierten Fluoreszenzspektren ($I_i(\lambda)$) der Fluoreszenzstandards (i) gebildet werden, wobei die statistische Mittelung über einen vorgegebenen, begrenzten Überlappungsbereich ($\lambda_{i/i+l} \pm \Delta\lambda_{OL}$) um die gegenseitige Überschneidungswellenlänge ($\lambda_{i/i+l}$) erfolgt; und
(D) Ermittlung einer Gesamtkorrekturfunktion $F(\lambda)$ für den vorgegebenen Spektralbereich durch statistisches Verknüpfen der in Abhängigkeit der Verknüpfungsfaktoren ($\alpha_i$) gewichteten Teilkorrekturfunktionen ($F_i(\lambda)$).

## Claims

**1.** A kit for traceably calibrating a photoluminescence measuring system, comprising:

a) at least one of each of the following fluorescence standards (i)

- a biphenyl derivative according to the general formula (1)

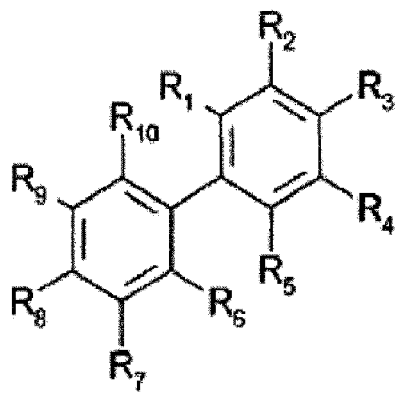

(1),

in which $R_1$ and $R_6$ each mean an alkoxy group and the remaining groups, independently of one another, mean a hydrogen group or alkyl group, wherein the alkoxy and alkyl groups, independently of one another, are cyclic or acyclic, branched or unbranched;
- a naphthalene derivative according to the general formula (2)

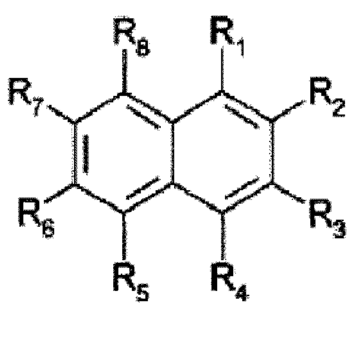

(2),

in which the groups $R_1$ to $R_8$, independently of one another, mean a hydrogen group or alkoxy group or, partially in combination with one another, an anellated, saturated hetero- or homo-nuclear ring;

- a 3H-phenoxazin-5-one derivative according to the general formula (5)

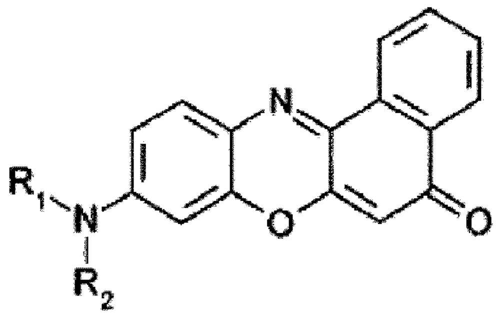

(5),

in which the groups $R_1$ and $R_2$, independently of one another, mean a hydrogen group or an unsubstituted or substituted n- or iso-alkyl group;
- a hemicyanine derivative according to the general formula (8)

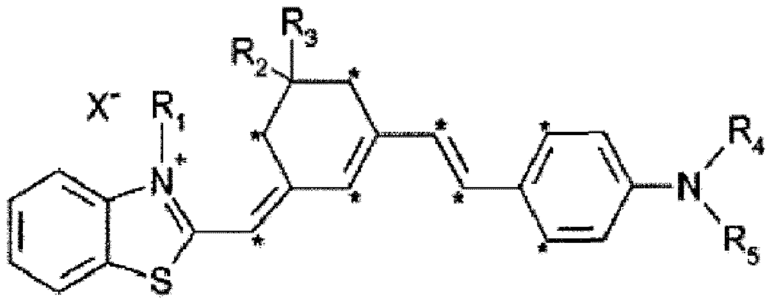

(8),

in which the groups $R_1$ to $R_5$, independently of one another, mean a hydrogen group or an unsubstituted or substituted n- or iso-alkyl group and $X^-$ means any anion, and the C atoms designated by an asterisk, independently of one another, may be bridged by a saturated C2 or C3 bridge;
- a p-terphenyl according to the general formula (9)

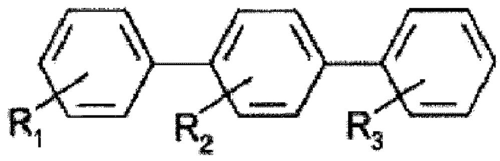

(9)

in which $R_1$ to $R_3$, independently of one another, mean hydrogen or an alkyl group or alkoxy group, in particular hydrogen;
- a 1,3,4-oxadiazole derivative according to the general formula (10)

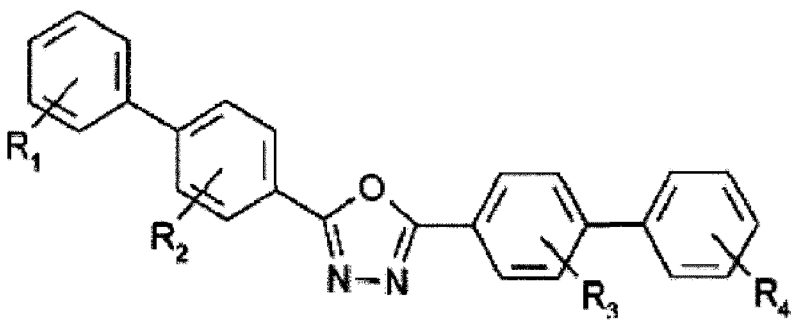

(10),

in which $R_1$ to $R_4$, independently of one another, mean hydrogen or an alkyl group or alkoxy group, in

particular hydrogen; and
- a hemicyanine derivative according to the general formula (7)

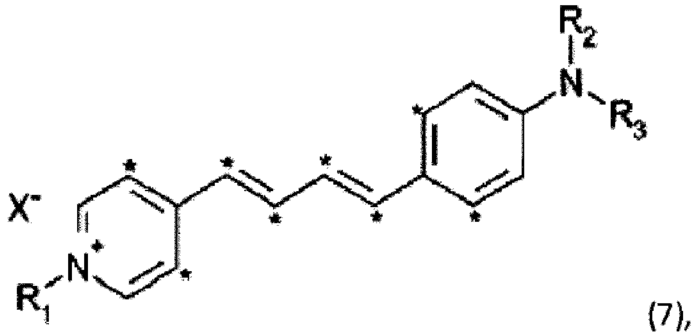

(7),

in which $R_1$ to $R_3$, independently of one another, mean a hydrogen group or an unsubstituted or substituted n- or iso-alkyl group, $X^-$ means any anion, and the C atoms designated by an asterisk, independently of one another, may be bridged by a saturated C2 or C3 bridge;

(b) corrected fluorescence spectra ($I_i(\lambda)$) of the fluorescence standards (i) in computer-readable form and/or a reference to an Internet page where the corrected fluorescence spectra ($I_i(\lambda)$) are available,

wherein the fluorescence standards (i) are selected in such a way that their spectrally corrected fluorescence spectra ($I_i(\lambda)$) together cover a predefined spectral range in such a way that fluorescence bands of the corrected, spectrally successive fluorescence spectra ($I_i(\lambda)$) have, in the UV/vis spectral range with $\lambda \leq 700$ nm, at their crossover wavelengths ($\lambda_{i/i+1}$), a minimal predefined intensity of at least 20% of the corresponding maximum band intensity, their fluorescence bands have each a half-width (FWHM) of at least 1400 $cm^{-1}$ and an unstructured band curve without a shoulder and with only one maximum in the relevant spectral range at a spectral resolution of 1 nm.

**2.** The kit according to claim 1,
in which, in the general formula (1), $R_1$ and $R_6$ each mean a methoxy group and the remaining groups each mean a hydrogen group.

**3.** The kit according to either one of the preceding claims,
in which, in the general formula (2), at least one of the two naphthalene rings is substituted by two alkoxy groups in a mirror-symmetric position, and the remaining groups are each hydrogen, wherein the alkoxy groups are acyclic, branched or unbranched, and do not have hydrogen groups in β-position relative to the ether oxygen atom.

**4.** The kit according to any one of the preceding claims,
in which, in the general formula (2), $R_1$ and $R_4$, independently of one another, are a methoxy group or neopentyloxy group and the remaining groups are each hydrogen groups.

**5.** The kit according to any one of the preceding claims,
in which, in the general formula (5), $R_1$ and $R_2$ each mean an unsubstituted, unbranched alkyl group, in particular in each case an ethyl group.

**6.** The kit according to any one of the preceding claims,
in which, in the general formula (7), $R_1$ is an ethyl group, $R_2$ and $R_3$ are each a methyl group, and $X^-$ is a perchlorate anion, and there is no C2 or C3 bridge provided.

**7.** The kit according to any one of the preceding claims,
in which, in the general formula (8), $R_1$ to $R_5$ are each a methyl group, $X^-$ is a perchlorate anion, and there is no C2 or C3 bridge provided.

**8.** The kit according to any one of the preceding claims,
further containing, as fluorescence standard (i), a coumarin derivative according to the general formula (3)

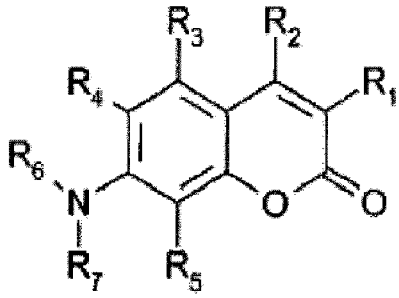

(3)

in which the groups $R_1$ to $R_7$, independently of one another, mean a hydrogen group or an unsubstituted or substituted alkyl group or, partially in combination with one another, an anellated, saturated homo-nuclear ring.

**9.** The kit according to claim 8, in which, in the general formula (3), $R_1$ and $R_2$, independently of one another mean a hydrogen group or an unsubstituted or substituted alkyl group or an anellated, saturated homo-nuclear ring, $R_3$ to $R_5$ each mean a hydrogen group, and $R_6$ and $R_7$, independently of one another, mean a hydrogen group or alkyl group.

**10.** The kit according to claim 8 or 9, in which, in the general formula (3), $R_1$ to $R_5$ are each a hydrogen group and $R_6$ and $R_7$ are each an ethyl group.

**11.** The kit according to any one of the preceding claims, further containing, as fluorescence standard (i), a coumarin derivative according to the general formula (4)

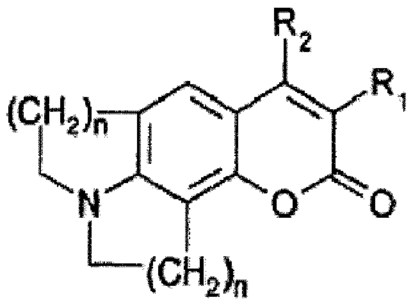

(4)

in which the groups $R_1$ and $R_2$, independently of one another, mean a hydrogen group or an unsubstituted or substituted alkyl group or, in combination with one another, mean an anellated, saturated homo-nuclear ring, and n is equal to 1 or 2.

**12.** The kit according to claim 11, in which, in the general formula (4), $R_1$ means a hydrogen group and $R_2$ means an unsubstituted or substituted alkyl group and n in each case is equal to 1 or 2.

**13.** The kit according to claim 11 or 12, in which, in the general formula (4), $R_1$ is a hydrogen group and $R_2$ is a trifluoromethyl group and n in each case is equal to 2.

**14.** The kit according to any one of the preceding claims, further containing as a fluorescence standard (i) a styryl derivative according to the general formula (6)

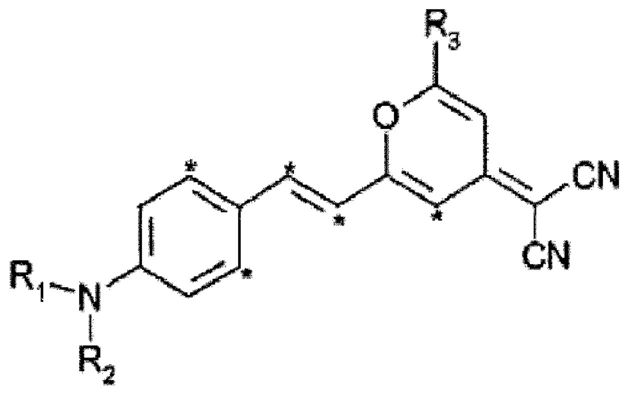

(6)

in which $R_1$, $R_2$ and $R_3$, independently of one another, mean a hydrogen group or an unsubstituted or substituted n- or iso-alkyl group, and the C atoms designated by an asterisk, independently of one another, may be bridged by a saturated C2 or C3 bridge.

**15.** The kit according to claim 14,
in which, in the general formula (6), $R_1$ to $R_3$ in each case is a methyl group and there is no C2 or C3 bridge provided.

**16.** The kit according to any one of claims 11 to 15, wherein
the kit comprises at least one fluorescence emission standard (i) according to each one of the general formulas (1) to (5).

**17.** The kit according to any one of claims 14 to 16, wherein
the kit comprises a fluorescence emission standard (i) according to each one of the general formulas (1) to (5) as well as at least one further fluorescence emission standard (i) selected from the general formulas (6), (7) and (8).

**18.** The kit according to any one of claims 11 to 17, wherein
the kit comprises at least one fluorescence excitation standard (i) according to each one of the general formulas (3), (4), (5), (9) and (10).

**19.** Use of a kit according to any one of the preceding claims for calibrating a luminescence measuring system, in particular a fluorescence measuring system, wherein
at least one of the following functions is performed:

(a) spectral calibration of the luminescence measuring system;
(b) determination of relative fluorescence quantum yields in the UV/vis/NIR spectral range, and
(c) determination of the linearity range of a detection system of the luminescence measuring system.

**20.** A method for traceably calibrating a photoluminescence measuring system comprising the steps of:

(A) providing a kit according to any one of claims 1 to 18;
(B) measuring fluorescence spectra (Ji(A)) of a plurality of fluorescence standards (i) from the kit using the photoluminescence measuring system to be calibrated;
(C) calculating combination factors ($\alpha_i$) through statistical averaging of successive, overlapping partial correction functions ($F_i(\lambda)$) , which are formed by forming the quotient of the measured fluorescence spectra (Ji(A)) and the corresponding corrected fluorescence spectra ($I_i(\lambda)$) of the fluorescence standards (i), wherein the statistical averaging takes place over a predefined, limited overlap region ($\lambda_{i/i+1} \pm \Delta\lambda_{OL}$) about the mutual crossover wavelengths ($\lambda_{i/i+1}$; and
(D) determining a total correction function ($F(\lambda)$) for the predefined spectral range by statistical combination of the partial correction functions ($F_i(\lambda)$), which are weighted according to the combination factors ($\alpha_i$).

## Revendications

**1.** Kit pour étalonnage traçable d'un système de mesure de la photoluminescence, comprenant :

a) au moins l'un des étalons de fluorescence (i) suivants

- un dérivé de biphényle de formule générale (1)

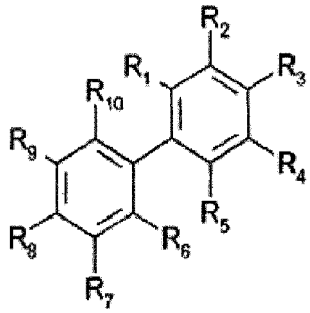

(1),

dans laquelle $R_1$ et $R_2$ représentent chacun un radical alcoxy, et les autres radicaux représentent, indépendamment les uns des autres, un hydrogène ou alkyle, les radicaux alcoxy et alkyle étant, indépendamment les uns des autres, cycliques ou acycliques, ramifiés ou non ramifiés ;
- un dérivé de naphtalène de formule générale (2)

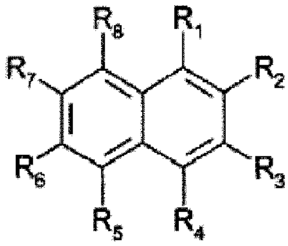

(2),

dans laquelle les radicaux $R_1$ à $R_8$ représentent indépendamment les uns des autres un hydrogène ou un radical alcoxy, ou, partiellement en combinaison les uns avec les autres, un noyau condensé, saturé, hétéro- ou homonucléaire ;
- un dérivé de 3H-phénoxazin-5-one de formule générale (5)

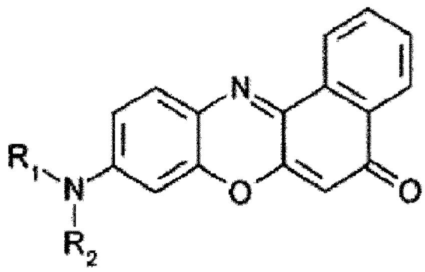

(5),

dans laquelle les radicaux $R_1$ et $R_2$ représentent indépendamment l'un de l'autre un hydrogène ou un radical n- ou iso-alkyle non substitué ou substitué ;
- un dérivé d'hémicyanine de formule générale (8)

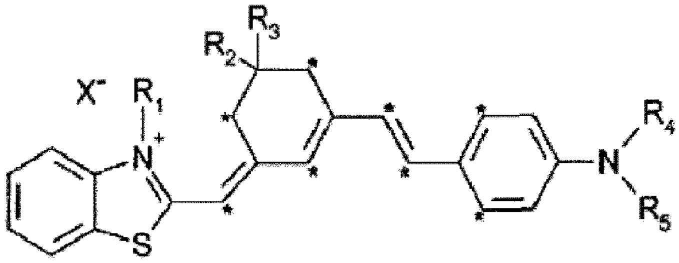

(8),

dans laquelle les radicaux $R_1$ à $R_5$ représentent indépendamment les uns des autres un hydrogène ou un radical n- ou iso-alkyle non substitué ou substitué, et $X^-$ un anion quelconque, et les atomes C marqués d'une astérisque pouvant, indépendamment les uns des autres, être pontés les uns aux autres par l'intermédiaire d'un pont C2 ou C3 saturé ;

- un p-terphényle de formule générale (9)

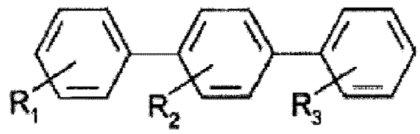

(9)

dans laquelle $R_1$ à $R_3$, indépendamment les uns des autres, représentent un hydrogène ou un radical alkyle ou alcoxy, en particulier un hydrogène ;

- un dérivé de 1,3,4-oxadiazole de formule générale (10)

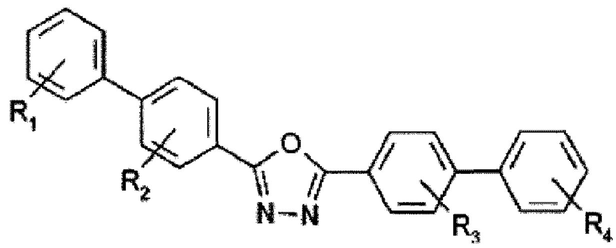

(10),

dans laquelle $R_1$ à $R_4$ représentent indépendamment les uns des autres un hydrogène ou un radical alkyle ou alcoxy, en particulier un hydrogène ; et

- un dérivé d'hémicyanine de formule générale (7)

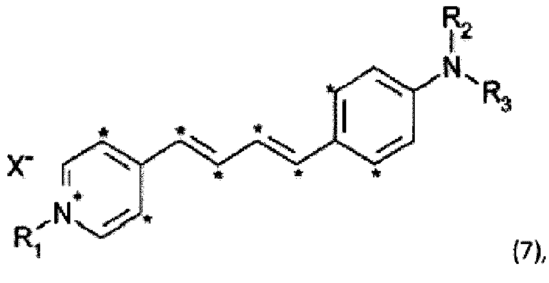

(7),

dans laquelle $R_1$ à $R_3$ représentent indépendamment les uns des autres un hydrogène ou un radical n- ou iso-alkyle non substitué ou substitué, $X^-$ représente un anion quelconque, et les atomes C marqués d'une astérisque peuvent, indépendamment les uns des autres, être pontés les uns aux autres par l'intermédiaire d'un pont C2 ou C3 saturé ; et

(b) des spectres de fluorescence corrigés ($I_i(\lambda)$) de l'étalon de fluorescence (i) sous forme lisible par un ordinateur et/ou une référence à une page Internet sur laquelle il est possible de récupérer les spectres de fluorescence ($I_i(\lambda)$) corrigés,

les étalons de fluorescence (i) étant choisis de telle sorte que leurs spectres de fluorescence ($I_i(\lambda)$) ayant subi une correction spectrale puissent, ensemble, recouvrir un domaine spectral prédéfini, de telle sorte que, dans la plage spectrale UV/vis avec $\lambda \leq 700$ nm, des bandes de fluorescence des spectres de fluorescence ($I_i(\lambda)$) corrigés, se suivant les uns les autres du point de vue spectral, présentent, au niveau de longueurs d'ondes de recouvrement ($\lambda_{i/(i+1)}$) une intensité minimale prédéfinie au moins de 20 % de l'intensité de bande maximale de chacune d'elles, que leurs bandes de fluorescence présentent chacune une largeur à mi-hauteur (FWHM) d'au moins 1400 $cm^{-1}$, ainsi qu'une évolution non structurée, sans épaulement, des bandes, avec dans chaque cas seulement un maximum dans la plage spectrale appropriée, pour une résolution spectrale de 1 nm.

**2.** Kit selon la revendication 1,
dans lequel, dans la formule générale (1), $R_1$ et $R_6$ représentent chacun un radical méthoxy, et chacun des autres radicaux représente un hydrogène.

**3.** Kit selon l'une des revendications précédentes,
dans lequel, dans la formule générale (2), au moins l'un des deux noyaux naphtalène est substitué par deux radicaux alcoxy en position à symétrie spéculaire, et les autres radicaux représentent chacun un hydrogène, les radicaux alcoxy étant acycliques, ramifiés ou non ramifiés, et ne présentant aucun hydrogène en position $\beta$ par rapport à l'atome d'oxygène d'éther.

**4.** Kit selon l'une des revendications précédentes,
dans lequel, dans la formule générale (2), $R_1$ et $R_4$ représentent indépendamment l'un de l'autre un radical méthoxy ou néopentyloxy, et chacun des autres radicaux représentent un hydrogène.

**5.** Kit selon l'une des revendications précédentes,
dans lequel, dans la formule générale (5), $R_1$ et $R_2$ représentent chacun un radical alkyle non substitué, non ramifié, en particulier chacun un radical éthyle.

**6.** Kit selon l'une des revendications précédentes,
dans lequel, dans la formule générale (7), $R_1$ représente un radical éthyle, $R_2$ et $R_3$ représentent chacun un radical méthyle et $X^-$ un anion perchlorate, et aucun pont en C2 ou C3 n'est présent.

**7.** Kit selon l'une des revendications précédentes,
dans lequel, dans la formule générale (8), $R_1$ à $R_5$ représentent chacun un groupe méthyle, $X^-$ un anion perchlorate, et aucun pont en C2 ou C3 n'est présent.

**8.** Kit selon l'une des revendications précédentes,
contenant en outre en tant qu'étalon de fluorescence (i) un dérivé de la coumarine de formule générale (3)

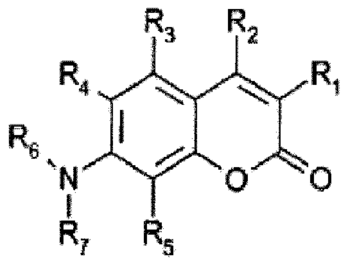

(3)

dans laquelle les radicaux $R_1$ à $R_7$ représentent indépendamment les uns des autres un hydrogène ou un radical alkyle non substitué ou substitué, ou représentent, partiellement en combinaison les uns avec les autres, un noyau condensé saturé homonucléaire.

**9.** Kit selon la revendication 8,
dans lequel, dans la formule générale (3), $R_1$ et $R_2$ représentent indépendamment l'un de l'autre un hydrogène ou un radical alkyle non substitué ou substitué ou un noyau condensé, saturé, homonucléaire, $R_3$ à $R_5$ représentent chacun un hydrogène, et $R_6$ et $R_7$ représentent indépendamment l'un de l'autre un hydrogène ou un radical alkyle.

**10.** Kit selon la revendication 8 ou 9,

dans lequel, dans la formule générale (3), $R_1$ à $R_5$ représentent chacun un hydrogène, et $R_6$ et $R_7$ représentent chacun un groupe éthyle.

**11.** Kit selon l'une des revendications précédentes, contenant en outre en tant qu'étalon de fluorescence (i) un dérivé de coumarine de formule générale (4)

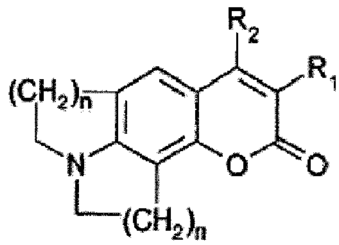

(4)

dans laquelle les radicaux $R_1$ et $R_2$ représentent indépendamment l'un de l'autre un hydrogène ou un radical alkyle non substitué ou substitué, ou, en combinaison les uns avec les autres, représentent un noyau condensé, saturé, homonucléaire, et n vaut 1 ou 2.

**12.** Kit selon la revendication 11,
dans lequel, dans la formule générale (4), $R_1$ représente un hydrogène et $R_2$ un radical alkyle non substitué ou substitué, et chaque n vaut 1 ou 2.

**13.** Kit selon la revendication 11 ou 12,
dans lequel, dans la formule générale (4), $R_1$ représente un hydrogène et $R_2$ un radical trifluorométhyle, et chaque n est égal à 2.

**14.** Kit selon l'une des revendications précédentes,
contenant en outre en tant qu'étalon de fluorescence (i) un dérivé de styryle de formule générale (6)

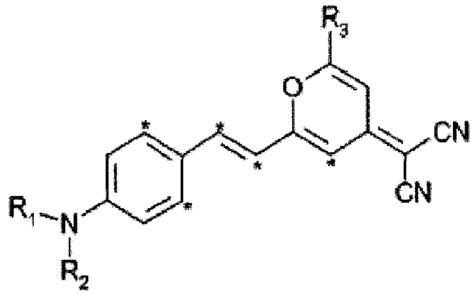

(6)

dans laquelle $R_1$, $R_2$ et $R_3$ représentent, indépendamment les uns des autres un hydrogène ou un radical n- ou iso-alkyle non substitué ou substitué, et les atomes C marqués d'une astérisque peuvent, indépendamment les uns des autres, être pontés les uns aux autres par l'intermédiaire d'un pont C2 ou C3 saturé.

**15.** Kit selon la revendication 14,
dans lequel, dans la formule générale (6), $R_1$ à $R_3$ représentent chacun un radical méthyle, et aucun pont C2 ou C3 n'est présent.

**16.** Kit selon l'une des revendications 11 à 15,
le kit comprenant au moins un étalon d'émission de fluorescence (i) selon l'une des formules générales (1) à (5).

**17.** Kit selon l'une des revendications 14 à 16,
le kit comportant un étalon d'émission de fluorescence (i) selon l'une des formules générales (1) à (5), ainsi qu'un autre étalon d'émission de fluorescence (i) choisi parmi les formules générales (6), (7) et (8).

**18.** Kit selon l'une des revendications 11 à 17,
le kit comprenant au moins un étalon d'excitation de fluorescence (i) selon l'une des formules générales (3), (4),

(5), (9) et (10).

**19.** Utilisation d'un kit selon l'une des revendications précédentes pour étalonnage d'un système de mesure de la luminescence, en particulier d'un système de mesure de la fluorescence, dans lequel
on exécute au moins l'une des fonctions suivantes :

(a) étalonnage spectral du système de mesure de la luminescence,
(b) détermination des rendements quantiques relatifs de fluorescence dans la plage spectrale UV/vis/NIR, et
(c) détermination de la plage de linéarité d'un système de détection du système de mesure de la luminescence.

**20.** Procédé pour étalonnage traçable d'un système de mesure de la photoluminescence, comprenant :

(A) fourniture d'un kit selon l'une des revendications 1 à 18 ;
(B) mesure de spectres de fluorescence (Ji($\lambda$)) d'un grand nombre d'étalons de fluorescence (i) provenant du kit comportant le système de photoluminescence à étalonner ;
(C) calcul de facteurs de liaison ($\alpha_i$) par moyennage statistique de fonctions de correction partielle ($F_i(\lambda)$) en chevauchement, successives, qui sont formées par formation du quotient entre les spectres de fluorescence mesurés ($J_i(\lambda)$) et les spectres de fréquence corrigée correspondants ($I_i(\lambda)$) de l'étalon de fluorescence (i), le moyennage statistique s'effectuant sur une plage de chevauchement limité prédéfinie ($\lambda_{i/i+1} \pm \Delta\lambda_{OL}$) autour de la longueur d'onde de recouvrement opposée ($\lambda_{i/i+1}$) ; et
(D) détermination d'une fonction de correction globale F($\lambda$) pour la plage spectrale prédéfinie par liaison statistique des fonctions de correction partielle (Fi($\lambda$)) en fonction des facteurs de liaison ($\alpha_i$).

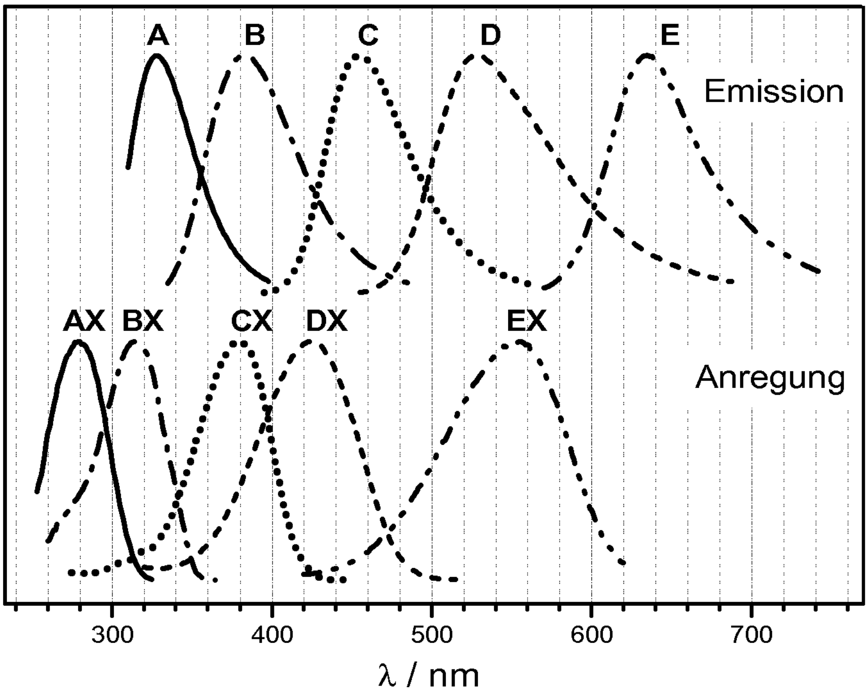
A
B
C
D
E
Emission
AX
BX
CX
DX
EX
Anregung
300
400
500
600
700
λ / nm

Fig. 1

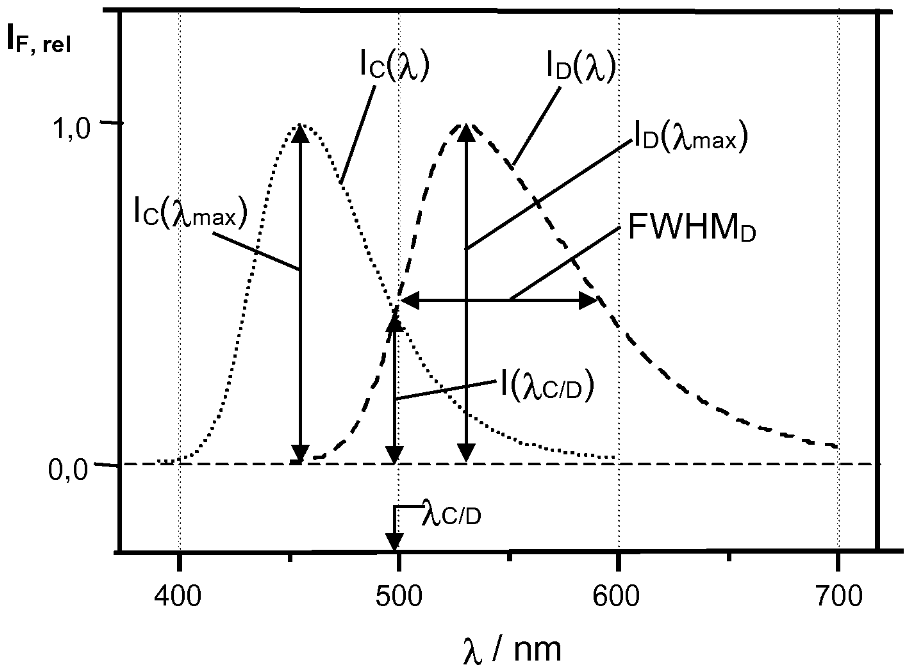
I F, rel
1,0
0,0
IC(λ)
ID(λ)
ID(λmax)
IC(λmax)
FWHMD
I(λC/D)
λC/D
400
500
600
700
λ / nm

Fig. 2

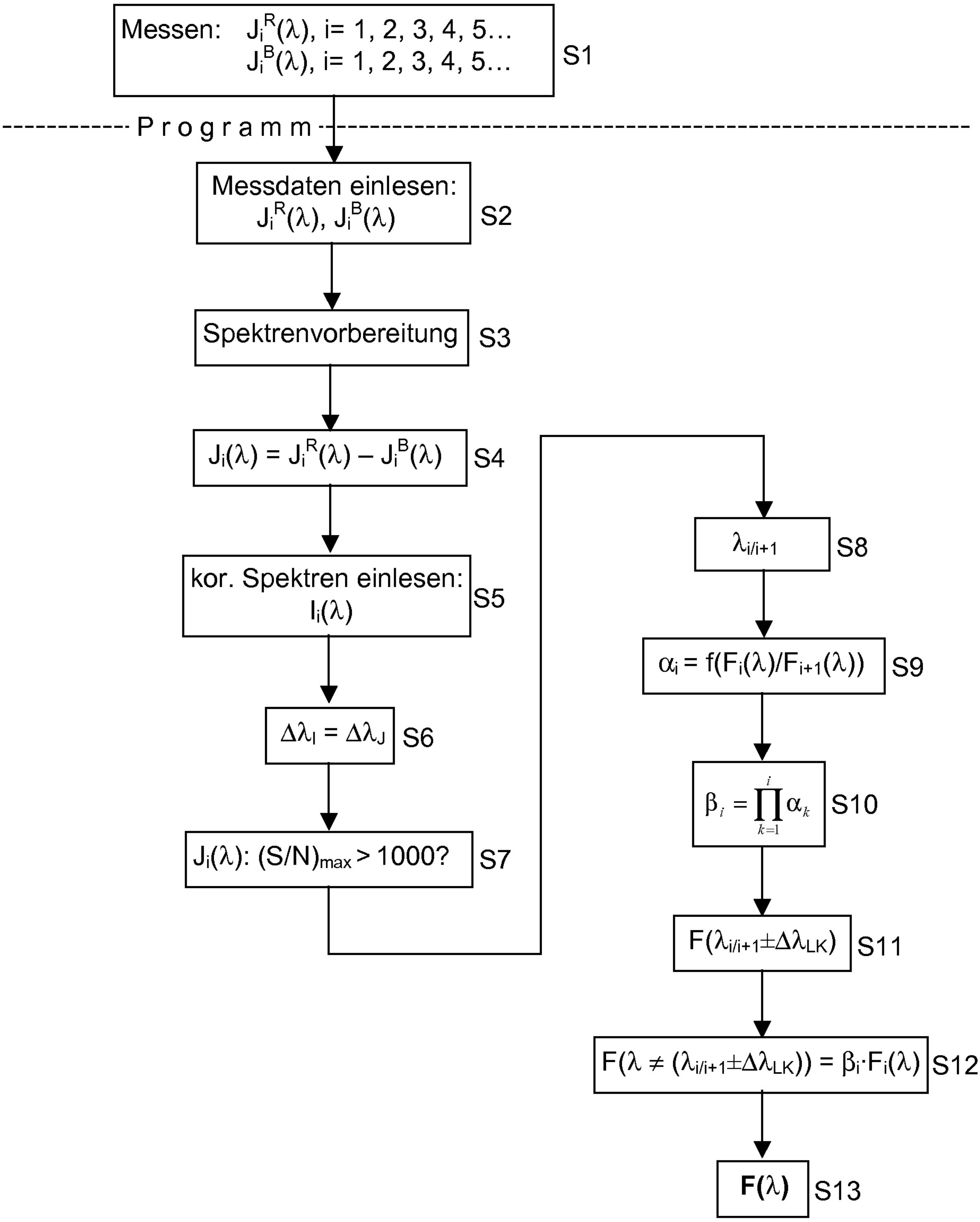
Messen: $J_i^R(\lambda)$, i= 1, 2, 3, 4, 5…
$J_i^B(\lambda)$, i= 1, 2, 3, 4, 5…
S1
Programm
Messdaten einlesen: $J_i^R(\lambda)$, $J_i^B(\lambda)$
S2
Spektrenvorbereitung
S3
$J_i(\lambda) = J_i^R(\lambda) - J_i^B(\lambda)$
S4
kor. Spektren einlesen: $I_i(\lambda)$
S5
$\Delta\lambda_I = \Delta\lambda_J$
S6
$J_i(\lambda)$: $(S/N)_{max} > 1000$?
S7
$\lambda_{i/i+1}$
S8
$\alpha_i = f(F_i(\lambda)/F_{i+1}(\lambda))$
S9
$\beta_i = \prod_{k=1}^{i} \alpha_k$
S10
$F(\lambda_{i/i+1} \pm \Delta\lambda_{LK})$
S11
$F(\lambda \neq (\lambda_{i/i+1} \pm \Delta\lambda_{LK})) = \beta_i \cdot F_i(\lambda)$
S12
**$F(\lambda)$**
S13

Fig. 3

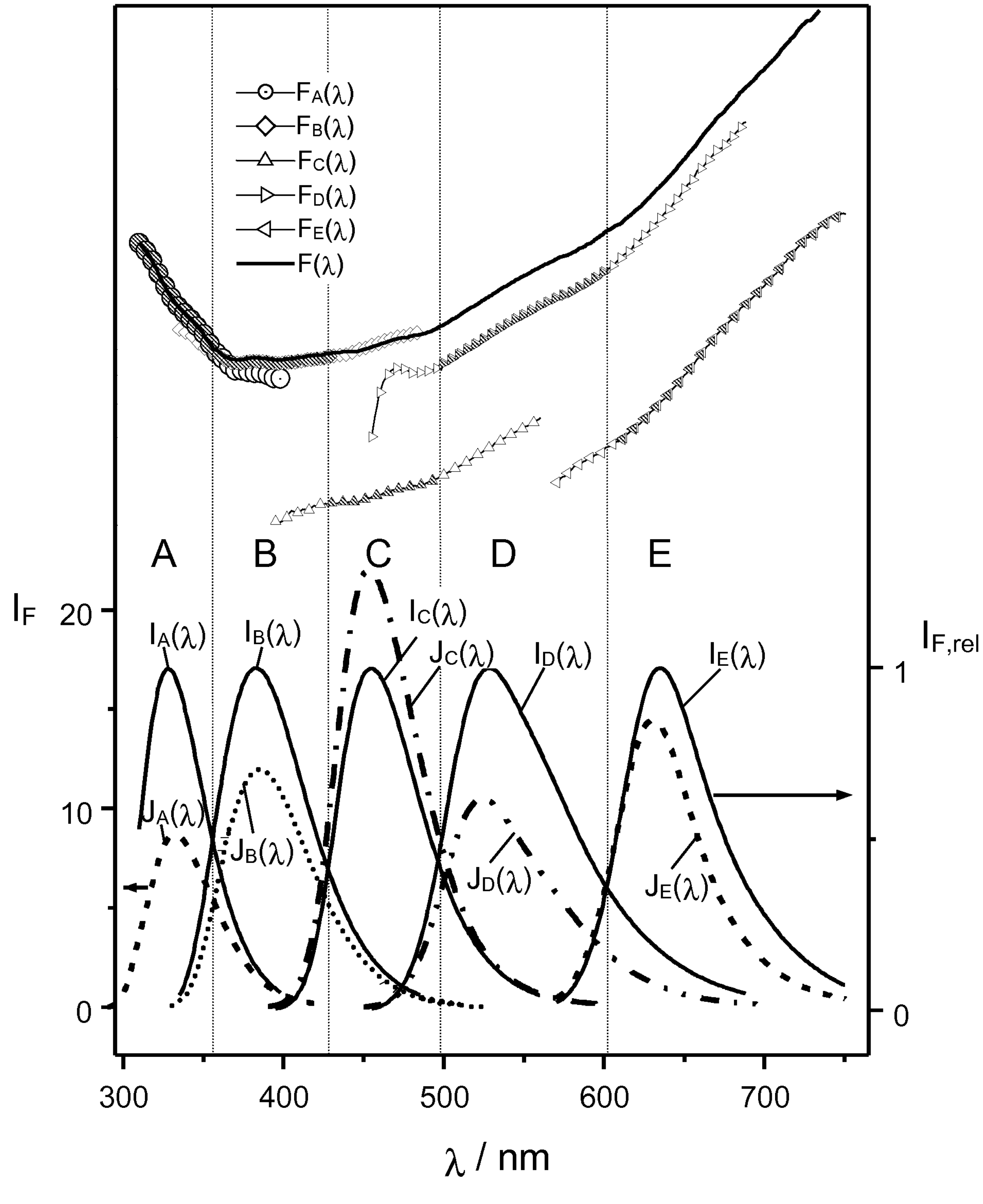

FA(λ)
FB(λ)
FC(λ)
FD(λ)
FE(λ)
F(λ)
A
B
C
D
E
IF
20
10
0
IA(λ)
IB(λ)
IC(λ)
JC(λ)
ID(λ)
IE(λ)
JA(λ)
JB(λ)
JD(λ)
JE(λ)
IF,rel
1
0
300
400
500
600
700
λ / nm


Fig. 4

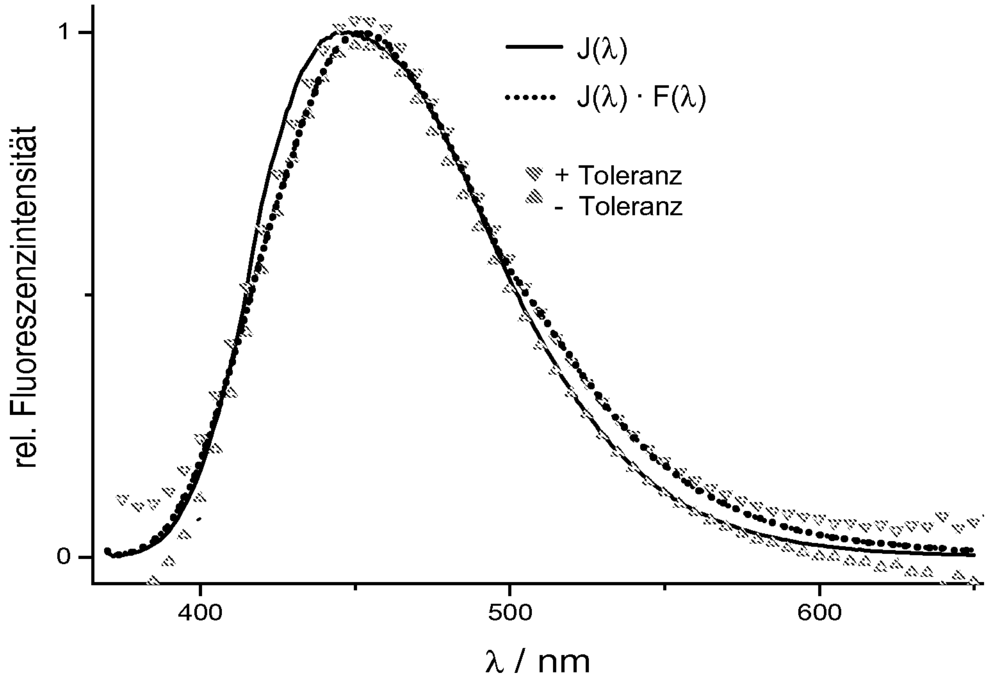
1
0
rel. Fluoreszenzintensität
400
500
600
λ / nm
J(λ)
J(λ) · F(λ)
+ Toleranz
- Toleranz

Fig. 5

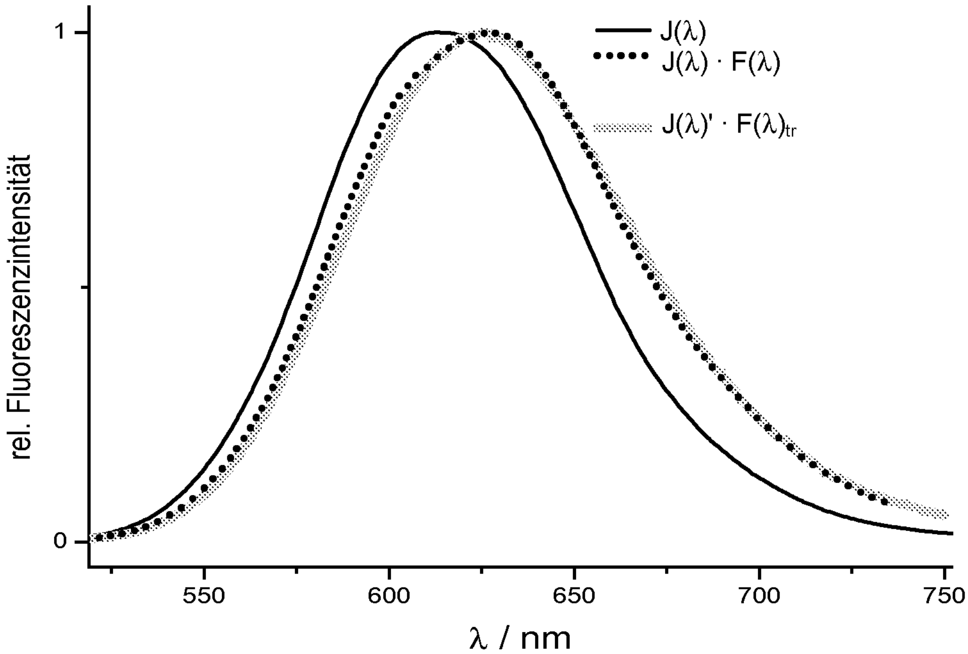
1
0
rel. Fluoreszenzintensität
550
600
650
700
750
λ / nm
J(λ)
J(λ) · F(λ)
J(λ)' · F(λ)tr

Fig. 6

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 97119188 A1
- WO 02104072 A2
- US 2003096419 A1


### In der Beschreibung aufgeführte Nicht-Patentliteratur


- **D.F. EATON.** *PURE & APPL CHEM,* 1988, vol. 60 (7), 1107-1114
- **RANCE A. VELAPOLDI et al.** *Journal of Fluorescence,* 2004, vol. 14 (4), 465-472
- **R.A. VELAPOLDI ; K.D. MIELENZ.** NBS Spec. Publ. Springfield, 1980, 260-264
- **J.W. HOFSTRAAT ; M.J. LATUHIHIN.** *Appl. Spectrosc.,* 1994, vol. 48, 436
- **VON J.A. GARDECKI ; M. MARONCELLI.** *Appl. Spectrosc.,* 1998, vol. 52, 1179